(19) **Europäisches Patentamt / European Patent Office / Office européen des brevets**

(11) **EP 4 776 524 A1**

(12) **EUROPEAN PATENT APPLICATION**
published in accordance with Art. 153(4) EPC

(43) Date of publication:
**15.07.2026 Bulletin 2026/29**

(21) Application number: **24870300.1**

(22) Date of filing: **28.08.2024**

(51) International Patent Classification (IPC):
**H04B 7/0456** (2017.01)

(52) Cooperative Patent Classification (CPC):
**H04B 7/0456; H04W 72/044; H04W 72/21; H04W 72/23**

(86) International application number:
**PCT/CN2024/115259**

(87) International publication number:
**WO 2025/066754 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 CN 202311283936**

(71) Applicant: **HUAWEI TECHNOLOGIES CO., LTD.**
**Shenzhen 518129 (CN)**

(72) Inventors:
- **LI, Ting**
  **Shenzhen, Guangdong 518129 (CN)**
- **CHEN, Zhihui**
  **Shenzhen, Guangdong 518129 (CN)**
- **GAO, Junhui**
  **Shenzhen, Guangdong 518129 (CN)**
- **XU, Jun**
  **Shenzhen, Guangdong 518129 (CN)**
- **WANG, Xiaohan**
  **Shenzhen, Guangdong 518129 (CN)**
- **JIN, Huangping**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **CHANNEL STATE INFORMATION FEEDBACK METHOD AND RELATED PRODUCT**

(57) A channel state information feedback method and a related product are provided. A network device sends first indication information. A terminal device sends second indication information based on the first indication information. The second indication information indicates X groups of basis vectors. The first indication information indicates P groups of basis vectors. The X groups of basis vectors belong to the P groups of basis vectors. Only a basis vector for representing a sub-eigenspace beam needs to be selected from a limited quantity of basis vector groups. In this way, indication overheads of a basis vector for representing a sub-eigenspace beam are reduced, and processing complexity is reduced. Alternatively, the first indication information indicates K basis vectors, and K is a positive integer greater than or equal to 1. Each of the X groups of basis vectors includes M basis vectors, the M basis vectors belong to the K basis vectors, and M≤K. Because the network device configures more basis vectors and provides selections for the terminal device, a tradeoff between reporting overheads and feedback accuracy can be implemented.

FIG. 6

## Description

This application claims priority to Chinese Patent Application No. 202311283936.5, filed with the China National Intellectual Property Administration on September 27, 2023 and entitled "CHANNEL STATE INFORMATION FEEDBACK METHOD AND RELATED PRODUCT", which is incorporated herein by reference in its entirety.

## TECHNICAL FIELD

This application relates to the field of communication technologies, and in particular, to a channel state information feedback method and a related product.

## BACKGROUND

A 5th generation (5th generation, 5G) mobile communication system has higher requirements on a system capacity, spectral efficiency, and the like. In the 5G mobile communication system, application of a massive multiple-antenna technology plays a critical role in improving spectral efficiency of the system. When a multiple-input multiple-output (multi-input multi-output, MIMO) technology is used, before sending data to a terminal device, a base station needs to precode the data. How to perform precoding needs to depend on channel state information (channel state information, CSI) fed back by the terminal device to the base station. Therefore, accurate CSI feedback information is an important factor that affects system performance.

In a frequency division duplex (frequency division duplex, FDD) mode, a frequency band spacing between uplink and downlink channels is far greater than a coherent bandwidth, and complete reciprocity does not exist on the uplink and downlink channels. Therefore, the terminal device needs to feed back CSI of the downlink channel to the base station. The base station determines, based on a precoding matrix indicator (precoding matrix indicator, PMI) fed back by the terminal device, precoding for transmitting data to the terminal device.

PMI feedback is determined and reported based on a set of codebooks. A design of an FDD CSI codebook is a basic and important problem in the 5G mobile communication system. Currently, a codebook based on statistical sub-eigenspace is proposed, and the codebook is represented by a linear combination of a group of sub-eigenspace beams in joint space-frequency domain. For such a codebook, the terminal device needs to feed back a statistical sub-eigenspace beam in a long periodicity, and feed back a beam superposition coefficient in a short periodicity. If elements of the statistical sub-eigenspace beam fed back in a long periodicity are directly fed back, feedback overheads are high. Therefore, how to reduce overheads of feeding back the sub-eigenspace beam is a key problem of such a codebook.

## SUMMARY

This application provides a channel state information feedback method and a related product, to reduce overheads of feeding back a sub-eigenspace beam.

According to a first aspect, a channel state information feedback method is provided, and is performed by a terminal device or a chip or a circuit used in the terminal device. The method includes: receiving first indication information, where the first indication information indicates P groups of basis vectors, each of the P groups of basis vectors includes M basis vectors, and P and M are positive integers greater than or equal to 1; and sending second indication information based on the first indication information, where the second indication information indicates X groups of basis vectors, the X groups of basis vectors respectively represent X groups of sub-eigenspace beams, the X groups of basis vectors belong to the P groups of basis vectors, each of the X groups of sub-eigenspace beams includes at least one beam, and X is a positive integer greater than or equal to 1. According to the method, the terminal device only needs to select, from a limited quantity of basis vector groups, a basis vector for representing a sub-eigenspace beam. In this way, indication overheads of the basis vector for representing the sub-eigenspace beam are reduced, and processing complexity of the terminal device is reduced.

For example, the first indication information is carried in a first message, and the first message includes at least one of the following: radio resource control (radio resource control, RRC) signaling, a medium access control-control element (medium access control-control element, MAC-CE), and downlink control information (downlink control information, DCI).

In a possible implementation, the first indication information includes indexes of the P groups of basis vectors, or the first indication information includes the P groups of basis vectors. Alternatively, a universal set of Q dimensions of basis vectors is predefined in a protocol, and a bitmap or a combinatorial number is used to indicate which M basis vectors are selected from Q basis vectors for each of the P groups of basis vectors. For example, the universal set of the Q dimensions of basis vectors may be predefined in the protocol, a network device indicates the indexes of the P groups of basis vectors through the first indication information, and the terminal device may select the P groups of basis vectors based on the indexes of the P groups of basis vectors.

In another possible implementation, the method further includes: receiving third indication information, where the third indication information indicates X. In this implementation, a grouping manner of the sub-eigenspace beams may be indicated by the network device, or may be predefined in a protocol. Alternatively, the network device indicates to select a grouping manner from a plurality of grouping manners predefined in a protocol. After the network device indicates X, the terminal device may group the sub-eigenspace beams in the grouping manner indicated by the network device or predefined in the protocol. The grouping manner may be as follows: For example, when X=2, continuous grouping may be performed, where the first [N/2] eigenbeams are in one group, and the last (N-[N/2]) eigenbeams are in the other group, that is, N1=[N/2] and N2=N-[N/2]. Alternatively, grouping may be performed based on odd and even numbers of the sub-eigenspace beams, where sub-eigenspace beams of odd numbers are in one group, and sub-eigenspace beams of even numbers are in the other group. A quantity of sub-eigenspace beams is N, and [.] represents rounding up or rounding down.

For example, the third indication information is carried in a second message, and the second message includes at least one of the following: RRC signaling, a MAC-CE, and DCI.

For example, the first message and the second message may be a same message or different messages.

In still another possible implementation, when X = 1, the second indication information is $log2(\lceil C(P,1) \rceil)$ bits; or when X > 1, the second indication information is $X \cdot log2(\lceil C(P,1) \rceil)$ bits. It can be learned that the terminal device indicates the X groups of basis vectors through the second indication information, and only needs to select, from a limited quantity of basis vector groups, a basis vector for representing a sub-eigenspace beam. In this way, indication overheads of the basis vector for representing the sub-eigenspace beam are reduced, and processing complexity of the terminal device is reduced.

In still another possible implementation, the method further includes: sending fourth indication information, where the fourth indication information indicates a combination coefficient corresponding to each of the X groups of basis vectors, a combination coefficient dimension corresponding to each of the X groups of basis vectors is M ∗ $N_i$, $1 \leq i \leq$ X, and $N_i$ is a quantity of beams in each group of sub-eigenspace beams. In this implementation, the terminal device further feeds back the combination coefficient corresponding to each of the X groups of basis vectors, so that the network device can restore a sub-eigenspace beam based on the X groups of basis vectors and the combination coefficient corresponding to each of the X groups of basis vectors that are fed back by the terminal device, to determine a precoding matrix based on the sub-eigenspace beam, and perform downlink data transmission based on the precoding matrix.

According to a second aspect, a channel state information feedback method is provided, and is performed by a network device or a chip or a circuit used in the network device. The method includes: sending first indication information, where the first indication information indicates P groups of basis vectors, each of the P groups of basis vectors includes M basis vectors, and P and M are positive integers greater than or equal to 1; and receiving second indication information based on the first indication information, where the second indication information indicates X groups of basis vectors, the X groups of basis vectors respectively represent X groups of sub-eigenspace beams, the X groups of basis vectors belong to the P groups of basis vectors, each of the X groups of sub-eigenspace beams includes at least one beam, and X is a positive integer greater than or equal to 1. According to the method, the network device indicates the P groups of basis vectors to the terminal device, and the terminal device indicates the X groups of basis vectors to the network device, so that the terminal device only needs to select, from a limited quantity of basis vector groups, a basis vector for representing a sub-eigenspace beam. In this way, indication overheads of the basis vector for representing the sub-eigenspace beam are reduced, and processing complexity of the terminal device is reduced.

For example, the first indication information is carried in a first message, and the first message includes at least one of the following: RRC signaling, a MAC-CE, and DCI.

In a possible implementation, the first indication information includes indexes of the P groups of basis vectors, or the first indication information includes the P groups of basis vectors. Alternatively, a universal set of Q dimensions of basis vectors is predefined in a protocol, and a bitmap or a combinatorial number is used to indicate which M basis vectors are selected from Q basis vectors for each of the P groups of basis vectors.

In another possible implementation, the method further includes: sending third indication information, where the third indication information indicates X.

For example, the third indication information is carried in a second message, and the second message includes at least one of the following: RRC signaling, a MAC-CE, and DCI.

For example, the first message and the second message may be a same message or different messages.

In still another possible implementation, when X = 1, the second indication information is $log2(\lceil C(P,1) \rceil)$ bits; or when X > 1, the second indication information is $X \cdot log2(\lceil C(P,1) \rceil)$ bits.

In still another possible implementation, the method further includes: receiving fourth indication information, where the fourth indication information indicates a combination coefficient corresponding to each of the X groups of basis vectors, a combination coefficient dimension corresponding to each of the X groups of basis vectors is M ∗ $N_i$, $1 \leq i \leq$ X, and $N_i$ is a quantity of beams in each group of sub-eigenspace beams.

According to a third aspect, a channel state information feedback method is provided, and is performed by a terminal device or a chip or a circuit used in the terminal device. The method includes: receiving first indication information, where the first indication information indicates K basis vectors, and K is a positive integer greater than or equal to 1; and sending second indication information based on the first indication information, where the second indication information indicates X groups of basis vectors, the X groups of basis vectors respectively represent X groups of sub-eigenspace beams, each of the X groups of basis vectors includes M basis vectors, the M basis vectors belong to the K basis vectors, M≤K, X is a positive integer greater than or equal to 1, and each group of sub-eigenspace beams includes at least one beam. According to the method, because the network device configures more basis vectors (but K is less than a quantity of basis vectors in a universal set of basis vectors) and provides selections for the UE, a tradeoff between reporting overheads and feedback accuracy can be implemented.

For example, the first indication information is carried in a first message, and the first message includes at least one of the following: RRC signaling, a MAC-CE, and DCI.

In a possible implementation, the first indication information includes indexes of the K basis vectors, or the first indication information includes the K basis vectors. Alternatively, a universal set of Q dimensions of basis vectors is predefined in a protocol, and a bitmap or a combinatorial number is used to indicate which K basis vectors are selected from Q basis vectors.

In another possible implementation, the method further includes: receiving third indication information, where the third indication information indicates X. In this implementation, a grouping manner of the sub-eigenspace beams may be indicated by the network device, or may be predefined in a protocol. Alternatively, the network device indicates to select a grouping manner from a plurality of grouping manners predefined in a protocol. After the network device indicates X, the terminal device may group the sub-eigenspace beams in the grouping manner indicated by the network device or predefined in the protocol. The grouping manner may be as follows: For example, when X=2, continuous grouping may be performed, where the first $\lceil N/2 \rceil$ eigenbeams are in one group, and the last $(N-\lceil N/2 \rceil)$ eigenbeams are in the other group, that is, N1=$\lceil N/2 \rceil$ and N2=N-$\lceil N/2 \rceil$. Alternatively, grouping may be performed based on odd and even numbers of the sub-eigenspace beams, where sub-eigenspace beams of odd numbers are in one group, and sub-eigenspace beams of even numbers are in the other group. A quantity of sub-eigenspace beams is N.

For example, the third indication information is carried in a second message, and the second message includes at least one of the following: RRC signaling, a MAC-CE, and DCI.

For example, the first message and the second message may be a same message or different messages.

In still another possible implementation, when X = 1, the second indication information is

$$log2(\lceil C(K,M) \rceil)$$ bits; or when X > 1, the second indication information is $X \cdot log2(\lceil C(K,M) \rceil)$ bits. It can be learned that the terminal device indicates the X groups of basis vectors through the second indication information, selects the M basis vectors from the K basis vectors, where K is less than a quantity of basis vectors in the universal set of the basis vectors, and provides selections for the UE, so that a tradeoff between reporting overheads and feedback accuracy can be implemented.

In still another possible implementation, the method further includes: sending fourth indication information, where the fourth indication information indicates a combination coefficient corresponding to each of the X groups of basis vectors, a combination coefficient dimension corresponding to each of the X groups of basis vectors is M ∗ $N_i$, $1 \le i \le X$, and $N_i$ is a quantity of beams in each group of sub-eigenspace beams. In this implementation, the terminal device further feeds back the combination coefficient corresponding to each of the X groups of basis vectors, so that the network device can restore a sub-eigenspace beam based on the X groups of basis vectors and the combination coefficient corresponding to each of the X groups of basis vectors that are fed back by the terminal device, to determine a precoding matrix based on the sub-eigenspace beam, and perform downlink data transmission based on the precoding matrix.

According to a fourth aspect, a channel state information feedback method is provided, and is performed by a network device or a chip or a circuit used in the network device. The method includes: sending first indication information, where the first indication information indicates K basis vectors, and K is a positive integer greater than or equal to 1; and receiving second indication information based on the first indication information, where the second indication information indicates X groups of basis vectors, the X groups of basis vectors respectively represent X groups of sub-eigenspace beams, each of the X groups of basis vectors includes M basis vectors, the M basis vectors belong to the K basis vectors, M≤K, X is a positive integer greater than or equal to 1, and each group of sub-eigenspace beams includes at least one beam. According to the method, because the network device configures more basis vectors (but K is less than a quantity of basis vectors in a universal set of basis vectors) and provides selections for UE, a tradeoff between reporting overheads and feedback accuracy can be implemented.

For example, the first indication information is carried in a first message, and the first message includes at least one of the following: RRC signaling, a MAC-CE, and DCI.

In a possible implementation, the first indication information includes indexes of the K basis vectors, or the first indication information includes the K basis vectors. Alternatively, a universal set of Q dimensions of basis vectors is predefined in a protocol, and a bitmap or a combinatorial number is used to indicate which K basis vectors are selected from Q basis vectors.

In another possible implementation, the method further includes: sending third indication information, where the third indication information indicates X.

For example, the third indication information is carried in a second message, and the second message includes at least one of the following: RRC signaling, a MAC-CE, and DCI.

For example, the first message and the second message may be a same message or different messages.

In still another possible implementation, when X = 1, the second indication information is $log2(\lceil C(K,M)\rceil)$ bits; or when X > 1, the second indication information is $X \cdot log2(\lceil C(K,M)\rceil)$ bits.

In still another possible implementation, the method further includes: receiving fourth indication information, where the fourth indication information indicates a combination coefficient corresponding to each of the X groups of basis vectors, a combination coefficient dimension corresponding to each of the X groups of basis vectors is M $*$ $N_i$, $1 \le i \le X$, and $N_i$ is a quantity of beams in each group of sub-eigenspace beams.

The method according to the first aspect and the third aspect may be performed by the terminal device, may be performed by a module (for example, a processor, a chip, or a chip system) used in the terminal device, or may be implemented by a logical node, a logical module, or software that can implement all or some of functions of the terminal device.

The method according to the second aspect and the fourth aspect may be performed by the network device, may be performed by a module (for example, a processor, a chip, or a chip system) used in the network device, or may be implemented by a logical node, a logical module, or software that can implement all or some of functions of the network device.

According to a fifth aspect, a communication apparatus is provided, and is configured to implement the channel state information feedback method according to any one of the first aspect or the implementations of the first aspect; or is configured to implement the channel state information feedback method according to any one of the third aspect or the implementations of the third aspect. The apparatus may be a terminal device, or a module (for example, a processor, a chip, or a chip system) used in the terminal device, or a logical node, a logical module, or software that can implement all or some of functions of the terminal device.

According to a sixth aspect, a communication apparatus is provided, and is configured to implement the channel state information feedback method according to any one of the second aspect or the implementations of the second aspect; or is configured to implement the channel state information feedback method according to any one of the fourth aspect or the implementations of the fourth aspect. The apparatus may be a network device, or a module (for example, a processor, a chip, or a chip system) used in the network device, or a logical node, a logical module, or software that can implement all or some of functions of the network device.

In a possible implementation, the communication apparatus according to the fifth aspect and the sixth aspect includes a module configured to perform the method according to any one of the first aspect to the fourth aspect or any one of the implementations of the first aspect to the fourth aspect. For example, the communication apparatus may include a sending unit and a receiving unit, and may further include a processing unit. The sending unit and the receiving unit may be independent of each other, or may be combined together (which may be referred to as a "transceiver unit").

In another possible implementation, the communication apparatus according to the fifth aspect and the sixth aspect includes a processor coupled to a memory. The processor is configured to support the apparatus in performing a corresponding function in the foregoing channel state information feedback method. The memory is configured to be coupled to the processor, and stores a program (instructions) and/or data necessary for the apparatus. Optionally, the communication apparatus may further include a communication interface configured to implement communication between the apparatus and another network element. Optionally, the memory may be located inside the communication apparatus, or may be located outside the communication apparatus.

In still another possible implementation, the communication apparatus according to the fifth aspect and the sixth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by a logic circuit or executing code instructions. The transceiver apparatus may be a transceiver, a transceiver circuit, an interface circuit, or an input/output interface, and is configured to: receive a signal from a communication apparatus other than the communication apparatus and transmit the signal to the processor, or send a signal from the processor to a communication apparatus other than the communication apparatus. When the communication apparatus is the chip, the transceiver apparatus is a transceiver circuit or an input/output interface.

When the communication apparatus according to the fifth aspect and the sixth aspect is a chip, the sending unit may be an output unit, for example, an output circuit or a communication interface, and the receiving unit may be an input unit, for example, an input circuit or a communication interface. When the communication apparatus is a terminal device or a network device, the sending unit may be a transmitter or a transmitter machine, and the receiving unit may be a receiver or a receiver machine.

According to a seventh aspect, a communication system is provided. The communication system includes the communication apparatus according to the fifth aspect and the communication apparatus according to the sixth aspect.

According to an eighth aspect, a chip is provided. The chip is configured to perform the methods according to the foregoing aspects.

According to a ninth aspect, a chip module is provided, and includes a transceiver component and a chip. The chip is configured to perform the methods according to the foregoing aspects.

According to a tenth aspect, a computer-readable storage medium is provided. The computer-readable storage medium stores a computer program or instructions. When the computer program or the instructions are executed, the methods according to the foregoing aspects are implemented.

According to an eleventh aspect, a computer program product including instructions is provided. When the instructions are run on a communication apparatus, the communication apparatus is caused to perform the methods according to the foregoing aspects.

**BRIEF DESCRIPTION OF DRAWINGS**

FIG. 1 is a simplified diagram of a wireless communication system according to an embodiment of this application;

FIG. 2A (a) to FIG. 2D are diagrams of a network architecture according to an embodiment of this application;

FIG. 3 is a diagram of a basic procedure of obtaining CSI by a network device and UE;

FIG. 4 is a diagram of a structure of a statistical sub-eigenspace codebook in joint space-frequency domain;

FIG. 5 is a diagram of projection quantization of a statistical sub-eigenspace beam;

FIG. 6 is a schematic flowchart of a channel state information feedback method according to an embodiment of this application;

FIG. 7 is a diagram of projection quantization of a statistical sub-eigenspace beam when $X > 1$ according to an example of an embodiment of this application;

FIG. 8 is a diagram of projection quantization of a statistical sub-eigenspace beam when $X = 1$ according to an example of an embodiment of this application;

FIG. 9 is a schematic flowchart of another channel state information feedback method according to an embodiment of this application;

FIG. 10 is another diagram of projection quantization of a statistical sub-eigenspace beam when $X > 1$ according to an example of an embodiment of this application;

FIG. 11 is another diagram of projection quantization of a statistical sub-eigenspace beam when $X = 1$ according to an example of an embodiment of this application;

FIG. 12 is a diagram of a structure of a communication apparatus according to an embodiment of this application; and

FIG. 13 is a diagram of a structure of another communication apparatus according to an embodiment of this application.

**DESCRIPTION OF EMBODIMENTS**

The following describes embodiments of this application with reference to the accompanying drawings in embodiments of this application.

"At least one piece (item)" in this application below indicates one piece (item) or a plurality of pieces (items). A plurality of pieces (items) means two or more pieces (items). "And/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In addition, it should be understood that, although terms such as first and second may be used in this application to describe objects, the objects are not limited to the terms. The terms are merely used for distinguishing the objects from each other.

The terms "including", "having", and any variations thereof mentioned in the following descriptions of this application are intended to cover a non-exclusive inclusion. For example, a process, method, system, product, or device that includes a series of steps or units is not limited to listed steps or units, but optionally further includes another unlisted step or unit, or optionally further includes another inherent step or unit of the process, method, product, or device. It should be noted that in this application, terms such as "example" or "for example" are used to represent giving an example, an illustration, or a description. Any method or design solution described as an "example" or "for example" in this application should not be construed as being more preferred or having more advantages than another method or design solution. To be precise, use of the terms such as "example" or "for example" are intended to present a relative concept in a specific manner.

A technology provided in this application may be applied to various communication systems. For example, the communication system may be a 4th generation (4th generation, 4G) mobile communication system (for example, a long term evolution (long term evolution, LTE) system), a 5G mobile communication system, a worldwide interoperability for microwave access (worldwide interoperability for microwave access, WiMAX) or wireless local area network (wireless local area network, WLAN) system, a converged system of a plurality of systems, or a future communication system, for example, a 6th generation (6th generation, 6G) mobile communication system. The 5G mobile communication system may also be referred to as a new radio (new radio, NR) system.

A network element in the communication system may send a signal to another network element or receive a signal from another network element. The signal may include information, signaling, data, or the like. The network element may alternatively be replaced with an entity, a network entity, a device, a terminal device, a communication module, a node, a communication node, or the like. In this application, the network element is used as an example for description. For example, the communication system may include at least one terminal device and at least one access network device. The access network device may send a downlink signal to the terminal device, and/or the terminal device may send an uplink signal to the access network device. In addition, it may be understood that, if the communication system includes a plurality of terminal devices, the plurality of terminal devices may also send signals to each other. In other words, both a signal sending network element and a signal receiving network element may be terminal devices.

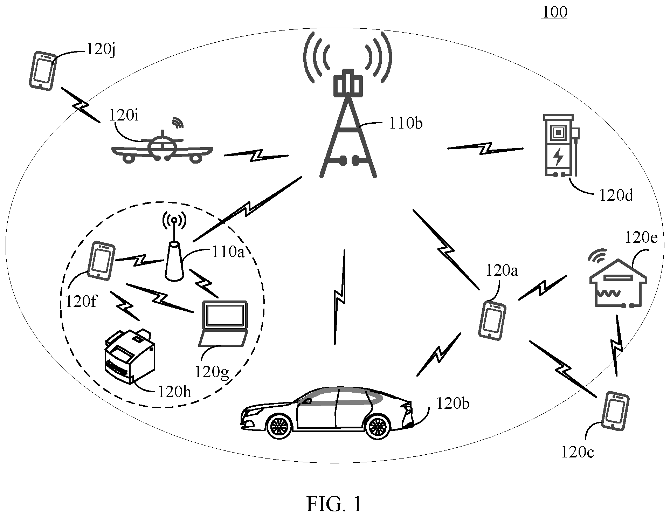

FIG. 1 is a simplified diagram of a wireless communication system according to an embodiment of this application. As shown in FIG. 1, the wireless communication system includes a radio access network 100. The radio access network 100 may be a next generation (for example, 6G or higher-version) radio access network, or a conventional (for example, 5G or 4G) radio access network. One or more terminal devices (120a to 120j, which are collectively referred to as 120) may be interconnected or connected to one or more network devices (110a and 110b, which are collectively referred to as 110) in the radio access network 100. Optionally, FIG. 1 is merely a diagram. The wireless communication system may further include another device, for example, may further include a core network device, a wireless relay device, and/or a wireless backhaul device, which are not shown in FIG. 1.

Optionally, in actual application, the wireless communication system may include a plurality of network devices (also referred to as access network devices) or may include a plurality of terminal devices. One network device may serve one or more terminal devices. One terminal device may also access one or more network devices. Quantities of terminal devices and network devices that are included in the wireless communication system are not limited in embodiments of this application.

The network device may be an entity that is configured to transmit or receive a signal on a network side. The network device may be an access device via which the terminal device accesses the wireless communication system in a wireless manner. For example, the network device may be a base station. The base station may cover various names in a broad sense, or may be replaced with the following names, for example, a radio access network (radio access network, RAN) node, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmitting and receiving point (transmitting and receiving point, TRP), a transmitting point (transmitting point, TP), a master eNodeB (master eNB, MeNB), a secondary eNodeB (secondary eNB, SeNB), a multi-standard wireless (multi-standard radio, MSR) node, a home base station, a network controller, an access node, a radio node, an access point (access point, AP), a transmitting node, a transceiver node, a baseband unit (baseband unit, BBU), a radio remote unit (remote radio unit, RRU), an active antenna unit (active antenna unit, AAU), a radio head (remote radio head, RRH), a central unit (central unit, CU), a distributed unit (distributed unit, DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node, or the like, or a combination thereof. Alternatively, the network device may be a communication module, a modem, or a chip disposed in the foregoing device or apparatus. Alternatively, the network device may be a mobile switching center, a device that takes on a base station function in device-to-device (device-to-device, D2D) communication, vehicle-to-everything (vehicle-to-everything, V2X) communication, and machine-to-machine (machine-to-machine, M2M) communication, a network side device in a 6G network, a device that takes on a base station function in a future communication system, or the like. The network device may support networks using a same access technology or different access technologies. A specific technology and a specific device form that are used by the network device are not limited in embodiments of this application.

The network device may be fixed or mobile. For example, base stations 110a and 110b are stationary, and are responsible for wireless transmission and reception in one or more cells from the terminal device 120. A helicopter or an uncrewed aerial vehicle 120i shown in FIG. 1 may be configured to serve as a mobile base station, and one or more cells may move based on a position of the mobile base station 120i. In another example, the helicopter or the uncrewed aerial vehicle (120i) may be configured to serve as a terminal device communicating with the base station 110b.

In this application, a communication apparatus configured to implement a function of the access network may be an access network device, a network device having some of functions of the access network, or an apparatus that can support implementation of the function of the access network, for example, a chip system, a hardware circuit, a software module, or a hardware circuit plus a software module. The apparatus may be mounted in the access network device or used together with the access network device. In the method in this application, an example in which the communication apparatus configured to implement the function of the access network device is an access network device is used for description.

The terminal device may be an entity, for example, a mobile phone, that is configured to receive or perform transmission of a signal on a user side. The terminal device may be configured to connect to a person, an object, and a machine. The terminal device may communicate with one or more core networks via the network device. The terminal device includes a handheld device having a wireless connection function, another processing device connected to a wireless modem, a vehicle-mounted device, and the like. The terminal device may be a portable, pocket-sized, handheld, computer built-in, or vehicle-mounted mobile apparatus. The terminal device 120 may be widely used in various scenarios, such as cellular communication, D2D, V2X, point-to-point (point-to-point, P2P), machine-to-machine (machine-to-machine, M2M), machine-type communication (machine-type communication, MTC), the internet of things (internet of things, IoT), virtual reality (virtual reality, VR), augmented reality (augmented reality, AR), industrial control, self-driving, telemedicine, a smart grid, smart furniture, a smart office, a smart wearable, smart transportation, a smart city, an uncrewed aerial vehicle, a robot, remote sensing, passive sensing, positioning, navigation and tracking, and autonomous delivery and mobility. Some examples of the terminal device 120 are a 3GPP standard user equipment (user equipment, UE), a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an uncrewed aerial vehicle, a helicopter, a flight, a ship, a remote control device, a smart home device, an industrial device, a personal communications service (personal communications service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device, for example, a smartwatch, a VR device, an AR device, a wireless terminal in industrial control (industrial control), a terminal in an internet of vehicles system, a wireless terminal in self-driving (self-driving), a wireless terminal in a smart grid (smart grid), a wireless terminal in transportation security (transportation safety), a wireless terminal in a smart city (smart city), for example, a smart fuel dispenser, a terminal device on a high-speed train, and a wireless terminal in smart home (smart home), for example, a smart speaker, a smart coffee machine, or a smart printer. The terminal device 120 may be a wireless device in the foregoing scenarios or an apparatus configured to be disposed on the wireless device, for example, a communication module, a modem, or a chip in the foregoing device. The terminal device may also be referred to as a terminal, a terminal equipment, a user equipment (user equipment, UE), a mobile station (mobile station, MS), a mobile terminal (mobile terminal, MT), or the like. Alternatively, the terminal device may be a terminal device in a future wireless communication system. The terminal device may be used in a dedicated network device or a general-purpose device. A specific technology and a specific device form used by the terminal device are not limited in embodiments of this application.

Optionally, the terminal device may be configured to serve as a base station. For example, the UE may serve as a scheduling entity that provides sidelink signals between UE in V2X, D2D, P2P, or the like. As shown in FIG. 1, a cellular phone 120a and a car 120b communicate with each other by using sidelink signals. The cellular phone 120a communicates with a smart home device 120e without relaying a communication signal via the base station 110b.

In this application, a communication apparatus configured to implement a function of the terminal device may be a terminal device, a terminal device having some of functions of the terminal device, or an apparatus that can support implementation of the function of the terminal device, for example, a chip system. The apparatus may be mounted in the terminal device or used together with the terminal device. In this application, the chip system may include a chip, or may include the chip and another discrete component. In the technical solutions provided in this application, an example in which the communication apparatus is a terminal device or UE is used for description.

Optionally, the wireless communication system usually includes a cell, the base station provides cell management, and the base station provides a communication service for a plurality of mobile stations (mobile station, MS) in the cell. The base station includes a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components of one rack. Optionally, one cell may correspond to one carrier or component carrier.

In some deployments, the network device mentioned in embodiments of this application may be a device including a CU or a DU, a device including a CU and a DU, or a device including a CU control plane node (a central unit-control plane (central unit-control plane, CU-CP)), a CU user plane node (a central unit-user plane (central unit-user plane, CU-UP)), and a DU node. For example, the network device may include a gNB-CU-CP, a gNB-CU-UP, and a gNB-DU.

In some deployments, a plurality of RAN nodes cooperate to assist a terminal in implementing radio access, and different RAN nodes respectively implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, the interface performs transfer of some downlink and/or uplink baseband functions. For example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, IFFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, split manners of the DU and RU are different, corresponding to eCPRIs of different categories (category, Cat), such as eCPRI Cats A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and another function after the layer mapping (for example, one or more of RE mapping, digital beamforming (beamforming, BF), or inverse fast Fourier transform (inverse fast Fourier transform, IFFT)/cyclic prefix (cyclic prefix, CP) addition) is moved to the RU for implementation. For uplink transmission, splitting is performed at RE demapping. The DU is configured to implement the demapping and one or more functions before the demapping (to be specific, one or more functions of decoding, de-rate matching, descrambling, demodulation, inverse discrete Fourier transform (inverse discrete Fourier transform, IDFT), channel equalization, and the RE demapping), and another function after the demapping (for example, one or more of digital BF or fast Fourier transform (fast Fourier transform, FFT)/CP removal) is moved to the RU for implementation. It may be understood that, for function descriptions of DUs and RUs corresponding to various categories of eCPRIs, refer to an eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any unit of the CU (or the CU-CP or the CU-UP), the DU, and the RU in this application may be implemented by using a software module, a hardware module, or a combination of the software module and the hardware module.

In embodiments of this application, an apparatus configured to implement a function of the network device may be a network device, or an apparatus that can support the network device in implementing the function, for example, a chip system, a hardware circuit, a software module, or a combination of the hardware circuit and the software module. The apparatus may be mounted in the network device or used together with the network device. In embodiments of this application, an example in which the apparatus configured to implement the function of the network device is a network device is merely used for description, and constitutes no limitation on the solutions in embodiments of this application.

It may be understood that this application may be applied between an access network device and a terminal device.

Communication between the network device and the terminal device complies with a specified protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the network device and the terminal device may further include an artificial intelligence (artificial intelligence, AI) layer for transmission of data related to an AI function.

Data transmission between the network device and the terminal device is used as an example. Data transmission needs to pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. Then, the MAC layer generates a transport block, and subsequently wireless transmission is performed through the physical layer. Data is correspondingly encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used for providing a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be used for forwarding user data, for example, forwarding uplink data received from the application layer to the SDAP layer, or forwarding downlink data received from the SDAP layer to the application layer.

To support an AI technology in a wireless network, an AI node may be further introduced into the network.

Optionally, the AI node may be deployed at one or more of the following positions in the communication system: an access network device, a terminal device, a core network device, or the like. Alternatively, the AI node may be independently deployed, for example, deployed at a position other than any one of the foregoing devices, for example, a host or a cloud server in an over-the-top (over-the-top, OTT) system. The AI node may communicate with another device in the communication system. For example, the another device may be one or more of the following: a network device, a terminal device, or a network element of a core network.

It may be understood that a quantity of AI nodes is not limited in this application. For example, when there are a plurality of AI nodes, the plurality of AI nodes may be divided based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application.

The AI node may be an AI network element or an AI module.

One or more AI modules are disposed on one or more devices of these network element nodes, such as a core network device, an access network node (a RAN node), a terminal, or an OAM. The access network node may serve as an independent RAN node, or may include a plurality of RAN nodes, for example, include a CU and a DU. One or more AI modules may alternatively be disposed on the CU and/or the DU. Optionally, the CU may be further split into a CU-CP and a CU-UP. One or more AI models are disposed on the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of the neural network, a connection relationship between layers, a weight value of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain one output through inference, where the output includes one or more parameters. Learning processes, training processes, or inference processes of different models may be deployed in different nodes or devices, or may be deployed in a same node or device.

The communication system includes a RAN intelligent controller (RAN intelligent controller, RIC). For example, the RIC may be the AI module, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, delay-insensitive data. A delay of the data may be several seconds. A real-time RIC mainly processes near-real-time information, for example, delay-sensitive data. A delay of the data is tens of milliseconds.

The near-real-time RIC is configured to perform model training and inference, for example, is configured to: train an AI model and perform inference by using the AI model. The near-real-time RIC may obtain information on a network side and/or a terminal side from the RAN node (for example, a CU, a CU-CP, a CU-UP, a DU, and/or an RU) and/or the terminal. The information may be used as training data or inference data. Optionally, the near-real-time RIC may deliver an inference result to the RAN node and/or the terminal. Optionally, the inference result may be exchanged between the CU and the DU and/or between the DU and the RU. For example, the near-real-time RIC delivers the inference result to the DU, and the DU sends the inference result to the RU.

The non-real-time RIC is also configured to perform model training and inference, for example, is configured to: train an AI model and perform inference by using the model. The non-real-time RIC may obtain information on a network side and/or a terminal side from the RAN node (for example, a CU, a CU-CP, a CU-UP, a DU, and/or an RU) and/or the terminal. The information may be used as training data or inference data, and an inference result may be delivered to the RAN node and/or the terminal. Optionally, the inference result may be exchanged between the CU and the DU and/or between the DU and the RU. For example, the non-real-time RIC delivers the inference result to the DU, and the DU sends the inference result to the RU.

Alternatively, the near-real-time RIC and the non-real-time RIC each may be independently disposed as a network element. Optionally, the near-real-time RIC and the non-real-time RIC may alternatively serve as a part of another device. For example, the near-real-time RIC is disposed on the RAN node (for example, in the CU or the DU), and the non-real-time RIC is disposed on an OAM, a cloud server, a core network device, or another network device.

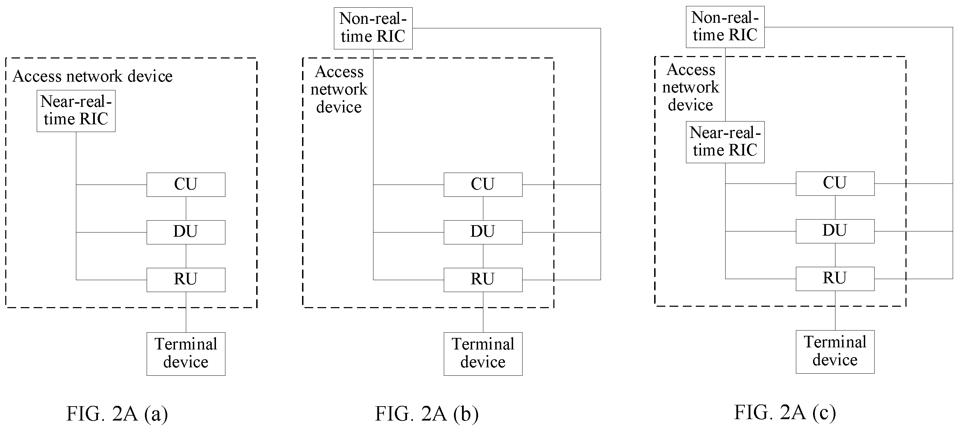

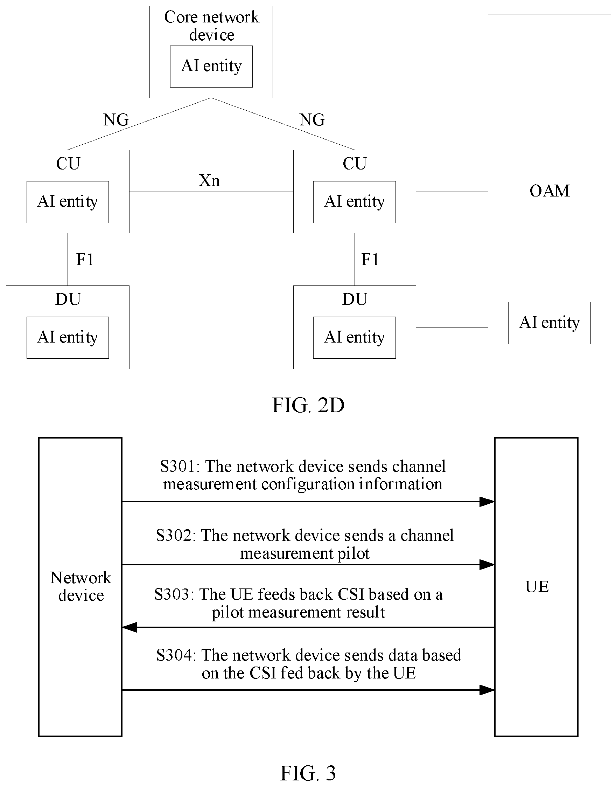

For example, disposition of the near-real-time RIC and the non-real-time RIC in a network architecture may be as shown in FIG. 2A (a) to FIG. 2D.

As shown in FIG. 2A (a), in a first possible implementation, an access network device includes a near-real-time RIC module, to perform model learning and/or inference.

As shown in FIG. 2A (b), in a second possible implementation, in a communication system, a non-real-time RIC may be included outside the access network device. Optionally, the non-real-time RIC may be located in an OAM or a core network device.

As shown in FIG. 2A (c), in a third possible implementation, the access network device includes a near-real-time RIC, and a non-real-time RIC is further included outside the access network device. Optionally, the non-real-time RIC may be located in an OAM or a core network device.

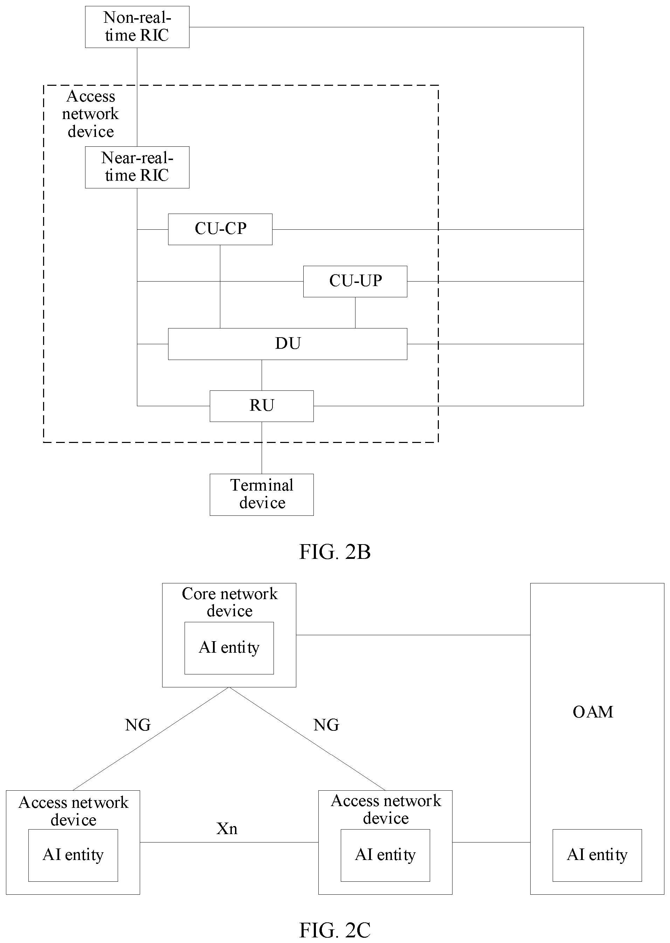

In comparison FIG. 2A (c), in FIG. 2B, the CU is split into a CU-CP and a CU-UP. The near-real-time RIC and the non-real-time RIC are disposed in a same way as FIG. 2A (c).

As shown in FIG. 2C, optionally, the access network device includes one or more AI entities, and a function of the AI entity is similar to that of the near-real-time RIC. Optionally, the OAM includes one or more AI entities, and a function of the AI entity is similar to that of the non-real-time RIC. Optionally, the core network device includes one or more AI entities, and a function of the AI entity is similar to that of the non-real-time RIC. When the OAM and the core network device each include an AI entity, models obtained through training by the AI entities of the OAM and the core network device are different, and/or models configured to perform inference are different. In this application, that the models are different includes at least one of the following: structure parameters of the models (for example, quantities of layers and/or weights of the models) are different; input parameters of the models are different; or output parameters of the models are different.

In comparison with FIG. 2C, the access network device in FIG. 2D is split into a CU and a DU. Optionally, the CU may include an AI entity, and a function of the AI entity is similar to that of the near-real-time RIC. Optionally, the DU may include an AI entity, and a function of the AI entity is similar to that of the near-real-time RIC. When the CU and the DU each include an AI entity, models obtained through training by the AI entities of the CU and the DU are different, and/or models configured to perform inference are different. Optionally, the CU in FIG. 2D may be further split into a CU-CP and a CU-UP. Optionally, one or more AI models may be deployed in the CU-CP, and/or one or more AI models may be deployed in the CU-UP. Optionally, in FIG. 2C or FIG. 2D, an OAM of the access network device and an OAM of the core network device may be separately and independently deployed.

It should be understood that quantities and types of devices in the communication system shown in FIG. 1 are merely used as an example. This application is not limited thereto. In actual application, the communication system may further include more terminal devices and more access network devices, and may further include another network element, for example, may include a core network device and/or a network element configured to implement an artificial intelligence function.

It may be understood that all or some of functions implemented by one or more of the terminal device, the access network device, the core network device, or the network element configured to implement the artificial intelligence function may be virtualized, to be specific, implemented by one or more of a dedicated processor or a general-purpose processor and a corresponding software module. Because the terminal device and the access network device are related to an air interface transmission interface, a transceiver function of the interface may be implemented by hardware. Core network devices such as an operations, administration, and maintenance (operations, administration, and maintenance, OAM) network element can all be virtualized. Optionally, one or more functions of the virtualized terminal device, access network device, core network device, or network element configured to implement the artificial intelligence function may be implemented by a cloud device, for example, implemented by a cloud device in an over-the-top (over-the-top, OTT) system.

Embodiments of this application relate to channel measurement and feedback. In a time division duplexing (time division duplexing, TDD) mode, on uplink and downlink channels, signal transmission is performed on a same frequency domain resource and different time resources. In a relatively short time (coherent time of channel propagation), it may be considered that channel fading experienced by the signals on the uplink and downlink channels is the same, and therefore, reciprocity exists. The network device may obtain CSI of the downlink channel based on the channel reciprocity by using the uplink channel, to further perform precoding.

However, in an FDD mode, a frequency band spacing between uplink and downlink channels is far greater than a coherent bandwidth, and complete reciprocity does not exist on the uplink and downlink channels. In a conventional FDD system, a user needs to feed back CSI of a downlink channel to a network device. FIG. 3 is a diagram of a basic procedure in which a network device and UE obtain CSI. The procedure includes the following steps. S301: The network device sends channel measurement configuration information to the UE, to notify the UE of channel measurement time and behavior. S302: The network device sends a channel measurement pilot to the UE for channel measurement. S303: The UE performs measurement based on the pilot sent by the network device, obtain a final CSI feedback amount through calculation, and feeds back CSI to the network device. S304: The network device sends data based on the CSI fed back by the UE. The network device determines, based on a channel rank indicator (rank indicator, RI) fed back by the UE, a quantity of streams for transmitting data to the UE. The network device determines, based on a channel state indicator (channel quality indicator, CQI) fed back by the UE, a modulation order for transmitting data to the UE and a bit rate of channel coding. The network device determines, based on a PMI fed back by the UE, precoding for transmitting data to the UE.

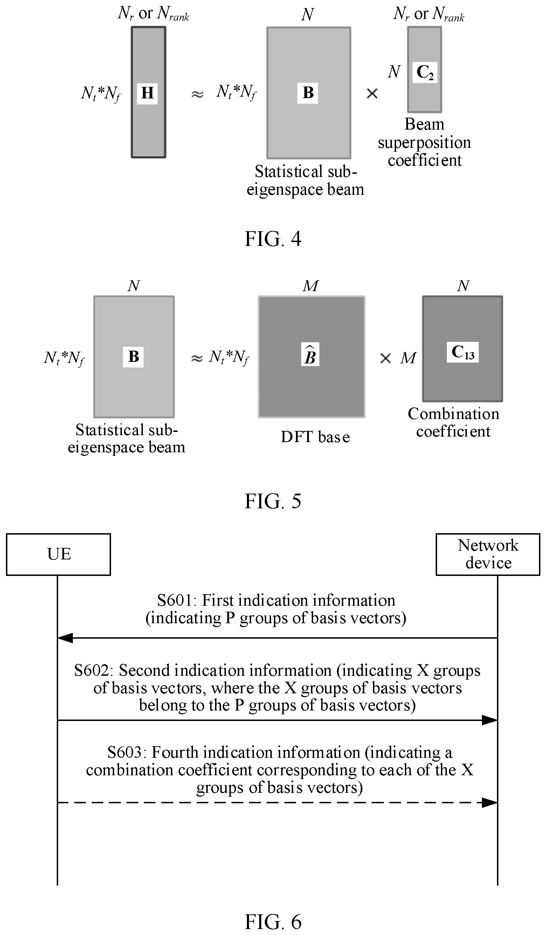

PMI feedback is determined and reported based on a set of codebooks. A design of an FDD CSI codebook is a basic and important problem in a 5G mobile communication system. Currently, for FDD CSI feedback, channel quantization is performed with reference to information on a network device side, and the PMI fed back by the UE is determined based on a channel main eigenvector of a transmit end that is on the network device side. In a release (release, Rel-) 15 type II codebook, an idea of spatial domain (angle) compression is used. A main eigenvector (that is, a precoding matrix of a single user) is represented by a linear combination of a plurality of discrete Fourier transform (discrete Fourier transform, DFT) basis vectors in spatial domain. Based on the R15 codebook, in a Rel-16 type II codebook, frequency domain (delay) compression is further performed by using frequency domain correlations of amplitudes and phase coefficients of different subbands, and a main eigenvector is represented by a bilinear combination of a plurality of space domain DFT basis vectors and a plurality of frequency domain DFT basis vectors. To make full use of sparseness of a channel in the space-frequency domain and further improve PMI feedback accuracy, a codebook based on statistical sub-eigenspace is further proposed. The codebook approximates a downlink channel or a main eigenvector of the downlink channel by a linear combination of sub-eigenspace beams collected in a long periodicity. The codebook may be represented in a form of a bilinear combination by a group of statistical sub-eigenspace beams in space domain and frequency domain that are similar to the Rel-16 type II codebook, or may be represented by a linear combination of a group of sub-eigenspace beams in joint space-frequency domain. FIG. 4 is a diagram of a structure of a statistical sub-eigenspace codebook in joint space-frequency domain. For such a codebook, UE needs to feed back a statistical sub-eigenspace beam in a long periodicity, and feed back a beam superposition coefficient in a short periodicity. If elements of the statistical sub-eigenspace beam fed back in a long periodicity are directly fed back in a scalar quantization manner, feedback overheads are high. How to feed back long-periodicity statistical sub-eigenspace beams with low overheads is a key problem of such a codebook.

For a long-periodicity feedback problem of the statistical sub-eigenspace beam, a projection quantization solution is currently used, and beams in a set of statistical sub-eigenspace beams are approximately represented by a linear combination of a same group of DFT basis vectors. FIG. 5 is a diagram of projection quantization of a statistical sub-eigenspace beam. $N_t * N_f$ represents a dimension of the statistical sub-eigenspace beam. $N$ is a quantity of statistical sub-eigenspace beams. $M$ is a quantity of selected DFT basis vectors. According to the projection quantization solution, the UE does not need to directly report $(N_t * N_f) \times N$ elements included in the statistical sub-eigenspace beam, and only needs to report indexes of the $M$ DFT basis vectors and $M \times N$ combination coefficients, so that feedback overheads can be reduced to some extent.

However, because a DFT basis vector dimension for quantizing an eigenbeam is relatively large, problems such as high processing complexity and high reporting overheads still exist when DFT basis vector selection and reporting are performed on a UE side. For example, $N_t$ = 16, $N_f$ = 13, *and M* = 32 . 16*13=208 DFT vectors whose dimensions are 208*1 are included, and

$$log2(\lceil C(208,32)\rceil) = 126$$ bits need to be used to indicate M DFT basis vectors for projection quantization of the statistical sub-eigenspace beam. In addition, because all eigenbeams are projected by using a same group of basis vectors, projection quantization accuracy of the eigenbeams is limited, and overall PMI feedback accuracy is affected. A linear/bilinear combination of the statistical sub-eigenspace beams cannot well approximate the downlink channel or the main eigenvector.

The foregoing solution does not fully consider a problem of high feedback overheads caused by a large basis vector dimension used for projection quantization of the eigenbeam. How to use partial reciprocity of FDD uplink and downlink channels to report a statistical sub-eigenspace beam with as few feedback overheads as possible without losing accuracy is an urgent problem to be resolved for such a codebook based on a statistical sub-eigenspace beam.

In view of this, this application provides a communication solution. A network device sends indication information of P groups of basis vectors to the terminal device, and the terminal device sends, based on the indication information, indication information of X groups of basis vectors in the P groups of basis vectors to the network device. The X groups of basis vectors respectively represent X groups of sub-eigenspace beams. Each of the X groups of sub-eigenspace beams includes at least one beam. Therefore, the terminal device only needs to select, from a limited quantity of basis vector groups, a basis vector for representing a sub-eigenspace beam. In this way, indication overheads of the basis vector for representing the sub-eigenspace beam are reduced, and processing complexity of the terminal device is reduced.

In this application, "sending information to... (for example, UE)" or a related illustration in the accompanying drawings may be understood as that a destination end of the information is the UE, and may include directly or indirectly sending the information to the UE. "Receiving information from... (for example, UE)", or "receiving information from... (for example, UE)", or a related illustration in the accompanying drawings may be understood as that a source end of the information is the UE, and may include directly or indirectly receiving the information from the UE. The information may undergo necessary processing, for example, a format change, between the source end and the destination end of information sending. However, the destination end may understand valid information from the source end. A similar expression in this application may be understood similarly, and details are not described herein again.

The following describes in detail a channel state information feedback method provided in embodiments of this application. It may be understood that, in this application, an example in which UE and a network device are used as execution entities of an interaction example is used for description. However, the execution entities of the interaction example are not limited in this application. For example, the UE in the method provided in this application may be a chip, a chip system, or a processor that is used in the UE, or may be a logical node, a logical module, or software that can implement all or a part of the UE. The network device in the method provided in this application may be a chip, a chip system, or a processor that is used in the network device, or may be a logical node, a logical module, or software that can implement all or some functions of the network device.

FIG. 6 is a schematic flowchart of a channel state information feedback method according to an embodiment of this application. For example, the method may include the following steps.

S601: A network device sends first indication information to UE. Correspondingly, the UE receives the first indication information.

In an FDD mode, a frequency band spacing between uplink and downlink channels is far greater than a coherent bandwidth, and partial reciprocity, for example, angle reciprocity and delay reciprocity, exists on the uplink and downlink channels. The network device pre-weights a downlink pilot signal based on the partial reciprocity of the uplink and downlink channels, to obtain one or more groups of basis vectors. In addition, this solution is based on a codebook based on statistical sub-eigenspace, and the codebook approximates a main eigenvector of the downlink channel by using a linear combination of statistical sub-eigenspace beams in a long periodicity. Therefore, in this embodiment, the network device configures, by using signaling, one or more groups of basis vectors for the UE to select, and performs projection quantization on the sub-eigenspace beams.

In this step, the network device sends the first indication information to the UE. The first indication information indicates a basis vector group configuration of a statistical sub-eigenspace beam ("sub-eigenspace beam" for short). For example, the first indication information indicates P groups of basis vectors, each of the P groups of basis vectors includes M basis vectors, and P and M are positive integers greater than or equal to 1.

The first indication information indicates the P groups of basis vectors, and may be implemented in the following two manners.

In an implementation, the first indication information includes indexes of the P groups of basis vectors. A universal set of Q dimensions of basis vectors (including Q basis vectors) is predefined in a protocol. Each group of basis vectors indicated by the network device through the first indication information is selected from the universal set of the Q dimensions of basis vectors predefined in the protocol, provided that the indexes of the P groups of basis vectors are indicated. For example, the basis vector may be a DFT basis vector.

In another implementation, the first indication information includes the P groups of basis vectors. To be specific, the network device directly configures the P groups of basis vectors for the UE, in other words, delivers a specific value of each of the P groups of basis vectors to the UE.

For example, the first indication information is carried in a first message, and the first message includes at least one of the following: RRC signaling, a MAC-CE, and DCI.

In still another implementation, a universal set of Q dimensions of basis vectors may be predefined in a protocol, and a bitmap or a combinatorial number is used to indicate which M basis vectors are selected from the Q basis vectors for each of the P groups of basis vectors.

In another example, a value of P may alternatively be indicated by the UE based on a UE capability parameter or predefined in a protocol.

S602: The UE sends second indication information to the network device based on the first indication information. Correspondingly, the network device receives the second indication information.

After receiving the first indication information, the UE groups the sub-eigenspace beams into X groups ($X = 1$ or $X > 1$), and selects $X$ groups of basis vectors from the P groups of basis vectors for projection quantization of $N$ sub-eigenspace beams, where $N$ is a positive integer greater than or equal to 1. The X groups of basis vectors respectively represent the X groups of sub-eigenspace beams. The X groups of basis vectors belong to the P groups of basis vectors. Each of the X groups of sub-eigenspace beams includes at least one beam. X is a positive integer greater than or equal to 1. Then, the UE sends the second indication information to the network device. The second indication information indicates the X groups of basis vectors selected by the UE.

For example, before step S602, the network device may further send third indication information to the terminal device. The third indication information indicates a grouping configuration indication of the sub-eigenspace beams. For example, the third indication information indicates X. For example, the third indication information is carried in a second message, and the second message includes at least one of the following: RRC signaling, a MAC-CE, and DCI. The second message and the first message may be a same message or different messages.

In another example, X may alternatively be determined by the UE or predefined in a protocol.

A grouping manner of the sub-eigenspace beams may be indicated by the network device, or may be predefined in a protocol. Alternatively, the network device indicates to select a grouping manner from a plurality of grouping manners predefined in a protocol. After the network device indicates X, the terminal device may group the sub-eigenspace beams in the grouping manner indicated by the network device or predefined in the protocol. The grouping manner may be as follows: For example, when X=2, continuous grouping may be performed, where the first [N/2] eigenbeams are in one group, and the last (N-[N/2]) eigenbeams are in the other group, that is, N1=[N/2] and N2=N-[N/2]. Alternatively, grouping may be performed based on odd and even numbers of the sub-eigenspace beams, where sub-eigenspace beams of odd numbers are in one group, and sub-eigenspace beams of even numbers are in the other group. A quantity of sub-eigenspace beams is N.

After receiving the second indication information, the network device may reconstruct the downlink channel with reference to information about an angle and a delay that are estimated by using the uplink channel.

Further, the method may further include the following step (where this step is optional and is represented by a dashed line in the figure).

S603: The UE sends fourth indication information to the network device. Correspondingly, the network device receives the fourth indication information.

The fourth indication information indicates a combination coefficient corresponding to each of the X groups of basis vectors. A combination coefficient dimension corresponding to each of the X groups of basis vectors is $M * N_i$. $1 \leq i \leq X$. $N_i$ is a quantity of beams in each group of sub-eigenspace beams.

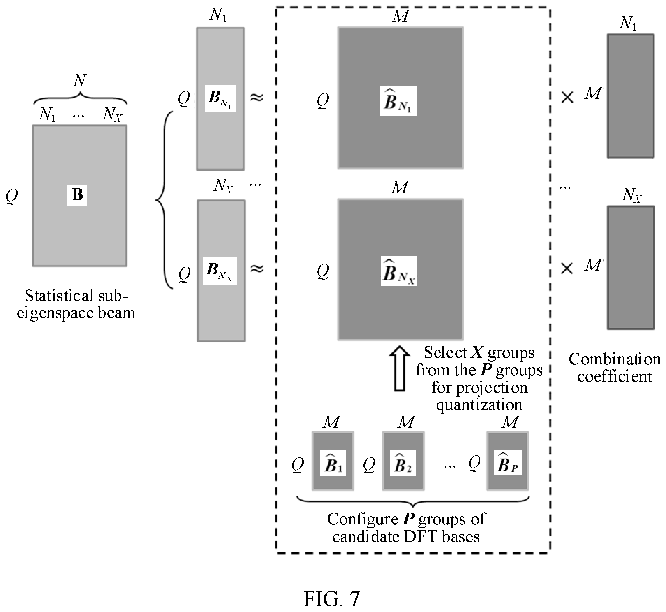

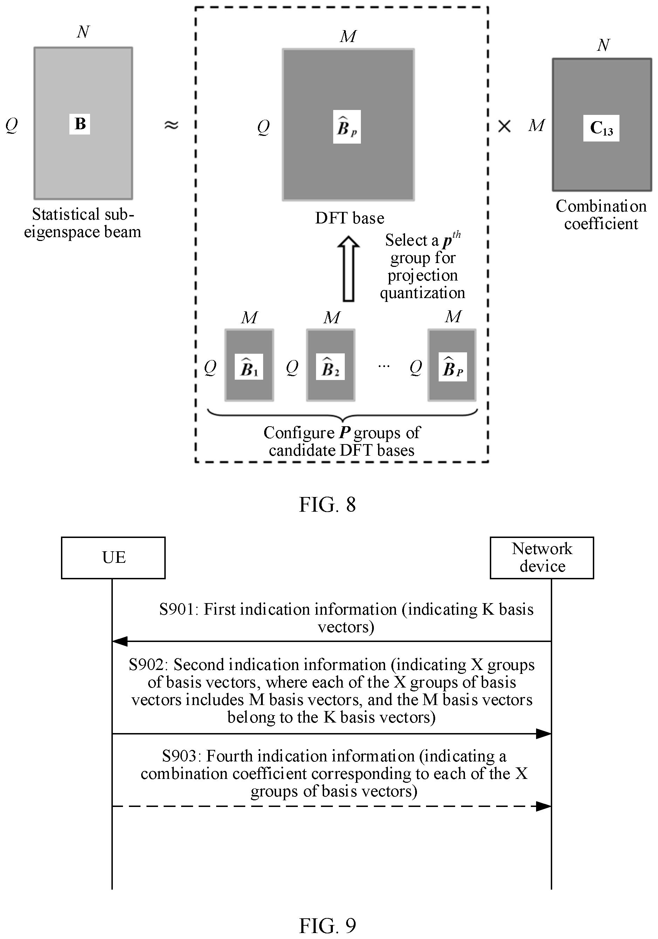

The following further describes the foregoing method by using an example. In this example, there are a total of $N$ sub-eigenspace beams, each of the $N$ beams has $Q$ dimensions, and statistical sub-eigenspace beams are represented by a matrix $B$. The network device configures $P$ groups of candidate basis vectors, for example, DFT basis vectors, for the UE based on an uplink channel measurement result and the partial reciprocity of the uplink and downlink channels. The basis vectors are represented by a matrix $\widehat{B_p}$, where $1 \leq p \leq P$, and $p$ is a positive integer. Each of the P groups of basis vectors includes M basis vectors, where M is a positive integer greater than or equal to 1. Each of the M basis vectors has $Q$ dimensions. The UE selects $X$ groups ($X = 1$ or $X > 1$) in the $P$ groups for projection quantization of the $N$ sub-eigenspace beams. FIG. 7 is a diagram of projection quantization of a statistical sub-eigenspace beam when $X > 1$ according to an example of an embodiment of this application. That $X > 1$ represents that the $N$ sub-eigenspace beams are grouped into $X$ groups, and for each group of sub-eigenspace beams, a group of basis vectors is selected from the $P$ groups of basis vectors for projection quantization. FIG. 8 is a diagram of projection quantization of a statistical sub-eigenspace beam when $X = 1$ according to an example of an embodiment of this application. That $X = 1$ represents that the $N$ sub-eigenspace beams do not need to be grouped, and a group of basis vectors are selected from the P groups of basis vectors for projection quantization.

In FIG. 7, the $N$ sub-eigenspace beams are grouped into $X$ groups, each beam in each group of sub-eigenspace beams has $Q$ dimensions, and each group of sub-eigenspace beams includes $N_i$ beams. Quantities of beams included in each of the $X$ groups of sub-eigenspace beams may be the same or different. Each group of sub-eigenspace beams is represented by a matrix $\widehat{B_{N_i}}$. The UE selects $X$ groups of basis vectors ( $\{\widehat{B_{N_1}}, ..., \widehat{B_{N_X}}\}$ ) from the $P$ groups of candidate basis vectors. The $X$ groups of basis vectors respectively represent the X groups of sub-eigenspace beams. Each of the $X$ groups of basis vectors also includes M basis vectors. Each of the X groups of basis vectors belongs to the P groups of basis vectors. A combination coefficient dimension corresponding to each of the X groups of basis vectors is M * $N_i$. In this case, a long-periodicity reporting amount is $X \cdot log2(\lceil C(P,1) \rceil)$ bits. In addition, in a special case, when X=N, each sub-eigenspace beam is in one group. For each sub-eigenspace beam, one group of basis vectors is selected from the P groups of basis vectors for projection quantization, and a long-periodicity reporting amount is $N \cdot log2(\lceil C(P,1) \rceil)$ bits.

In FIG. 8, projection quantization is performed on the $N$ sub-eigenspace beams by using a same group of basis vectors without needing to perform grouping. The UE selects one group of basis vectors ( $\widehat{B_p}$ ) from the $P$ groups of candidate basis vectors, to represent the sub-eigenspace beams. The selected group of basis vectors includes M basis vectors, and each of the M basis vectors has $Q$ dimensions. A combination coefficient dimension corresponding to the group of basis vectors is M * N (represented by a matrix $C_{13}$). In this case, a long-periodicity reporting amount is $log2(\lceil C(P,1) \rceil)$ bits. In addition, in a special case, if the network device configures a group of basis vectors ($P = X = 1$), the UE does not need to select a basis vector, and directly uses the basis vector configured by the network device for projection quantization of all of the sub-eigenspace beams.

According to the channel state information feedback method provided in this embodiment of this application, the network device sends indication information of P groups of basis vectors to the terminal device, and the terminal device sends, based on the indication information, indication information of X groups of basis vectors in the P groups of basis vectors to the network device. The X groups of basis vectors respectively represent X groups of sub-eigenspace beams. Each of the X groups of sub-eigenspace beams includes at least one beam. Therefore, the terminal device only needs to select, from a limited quantity of basis vector groups, a basis vector for representing a sub-eigenspace beam. In this way, indication overheads of the basis vector for representing the sub-eigenspace beam are reduced, and processing complexity of the terminal device is reduced.

In addition, in this embodiment, statistical sub-eigenspace beams are grouped into X groups, and each group of beams is approximately represented by a linear combination of one group of basis vectors. In comparison with that beams in a statistical sub-eigenspace beam set are approximately represented by a linear combination of a same group of basis vectors in FIG. 5, this further improves projection quantization accuracy of eigenbeams, and further improves overall PMI feedback accuracy.

However, due to limited reciprocity of space-frequency parts of an uplink and a downlink, basis vectors preconfigured by the network device may be different from that actually needed by the UE. Therefore, this application further provides another communication solution. The network device sends first indication information to the terminal device, and the terminal device sends second indication information to the network device based on the first indication information. The second indication information indicates X groups of basis vectors. The X groups of basis vectors respectively represent X groups of sub-eigenspace beams. Each of the X groups of sub-eigenspace beams includes at least one beam. The first indication information indicates K basis vectors, and K is a positive integer greater than or equal to 1. Each of the X groups of basis vectors includes M basis vectors, the M basis vectors belong to the K basis vectors, and M≤K. Because the quantity K of the basis vectors in the basis vectors configured by the network device is greater than the quantity M of basis vectors actually used by the UE, in other words, the network device configures more basis vectors (but K is less than a quantity of basis vectors in a universal set) and provides selections for the UE, a tradeoff between reporting overheads and feedback accuracy can be implemented.

FIG. 9 is a schematic flowchart of another channel state information feedback method according to an embodiment of this application. For example, the method may include the following steps.

S901: A network device sends first indication information to UE. Correspondingly, the UE receives the first indication information.

In this embodiment, the network device configures, by using signaling, a plurality of basis vectors for the UE to select, and performs projection quantization on the sub-eigenspace beams. For example, the network device sends the first indication information to the UE. For example, the network device sends the first indication information to the UE. The first indication information indicates a basis vector configuration of the sub-eigenspace beam. For example, the first indication information indicates K basis vectors, where K is a positive integer greater than or equal to 1. For example, the basis vector is a DFT basis vector.

The first indication information indicates the K basis vectors, and may be implemented in the following two manners.

In an implementation, the first indication information includes indexes of the K basis vectors. A universal set of Q dimensions (including Q basis vectors) is predefined in a protocol. All of the K basis vectors indicated by the network device through the first indication information are selected from the universal set of the Q dimensions predefined in the protocol, provided that the indexes of the K basis vectors are indicated.

In another implementation, the first indication information includes the K basis vectors. To be specific, the network device directly configures the K basis vectors for the UE, in other words, delivers a specific value of each of the K basis vectors to the UE.

For example, the first indication information is carried in a first message, and the first message includes at least one of the following: RRC signaling, a MAC-CE, and DCI.

In still another implementation, a universal set of Q dimensions of basis vectors may be predefined in a protocol, and a bitmap or a combinatorial number is used to indicate which K basis vectors are selected from Q basis vectors.

In another example, a value of $K$ may alternatively be indicated by the UE based on a UE capability parameter or predefined in a protocol.

S902: The UE sends second indication information to the network device based on the first indication information. Correspondingly, the network device receives the second indication information.

After receiving the first indication information, the UE groups $N$ sub-eigenspace beams into $X$ groups ($X$ = 1 or $X$ > 1), where $N$ is a positive integer greater than or equal to 1. For each group of sub-eigenspace beams, $M$ basis vectors are selected from the K basis vectors for projection quantization of the group of sub-eigenspace beams, where $M$ is a positive integer greater than or equal to 1. The X groups of basis vectors respectively represent the X groups of sub-eigenspace beams. Each of the X groups of basis vectors includes M basis vectors, the M basis vectors belong to the K basis vectors, and M≤K. Each of the X groups of sub-eigenspace beams includes at least one beam. X is a positive integer greater than or equal to 1. Then, the UE sends the second indication information to the network device. The second indication information indicates the X groups of basis vectors selected by the UE.

For example, the M basis vectors selected by the UE for each group of sub-eigenspace beams may be completely different, or partially the same, or completely the same.

For example, before step S902, the network device may further send third indication information to the terminal device. The third indication information indicates a grouping configuration indication of the sub-eigenspace beams. For example, the third indication information indicates X . For example, the third indication information is carried in a second message, and the second message includes at least one of the following: RRC signaling, a MAC-CE, and DCI. For example, the second message and the first message may be a same message or different messages.

In another example, X may alternatively be indicated by the UE or predefined in a protocol.

A grouping manner of the sub-eigenspace beams may be indicated by the network device, or may be predefined in a protocol. Alternatively, the network device indicates to select a grouping manner from a plurality of grouping manners predefined in a protocol. After the network device indicates X, the terminal device may group the sub-eigenspace beams in the grouping manner indicated by the network device or predefined in the protocol. The grouping manner may be as follows: For example, when X=2, continuous grouping may be performed, where the first [N/2] eigenbeams are in one group, and the last (N-[N/2]) eigenbeams are in the other group, that is, N1=[N/2] and N2=N-[N/2]. Alternatively, grouping may be performed based on odd and even numbers of the sub-eigenspace beams, where sub-eigenspace beams of odd numbers are in one group, and sub-eigenspace beams of even numbers are in the other group. A quantity of sub-eigenspace beams is N.

Further, the method may further include the following step (where this step is optional and is represented by a dashed line in the figure).

S903: The UE sends fourth indication information to the network device. Correspondingly, the network device receives the fourth indication information.

The fourth indication information indicates a combination coefficient corresponding to each of the X groups of basis vectors. A combination coefficient dimension corresponding to each of the X groups of basis vectors is M ∗ $N_i$. $1 \leq i \leq X$. $N_i$ is a quantity of beams in each group of sub-eigenspace beams.

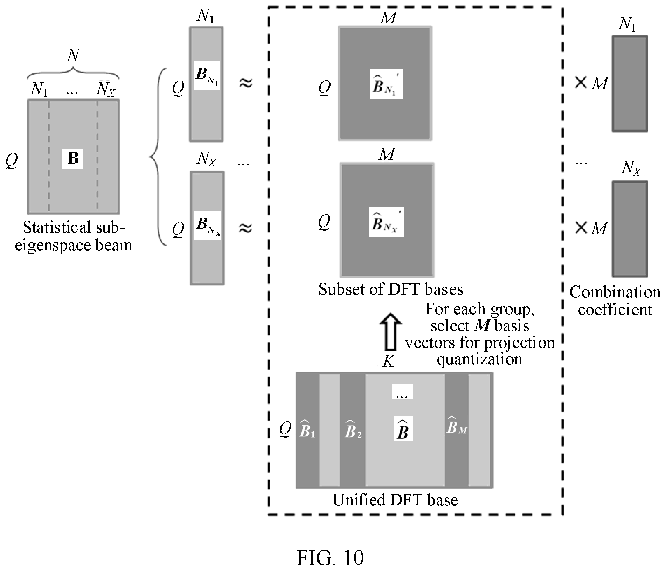

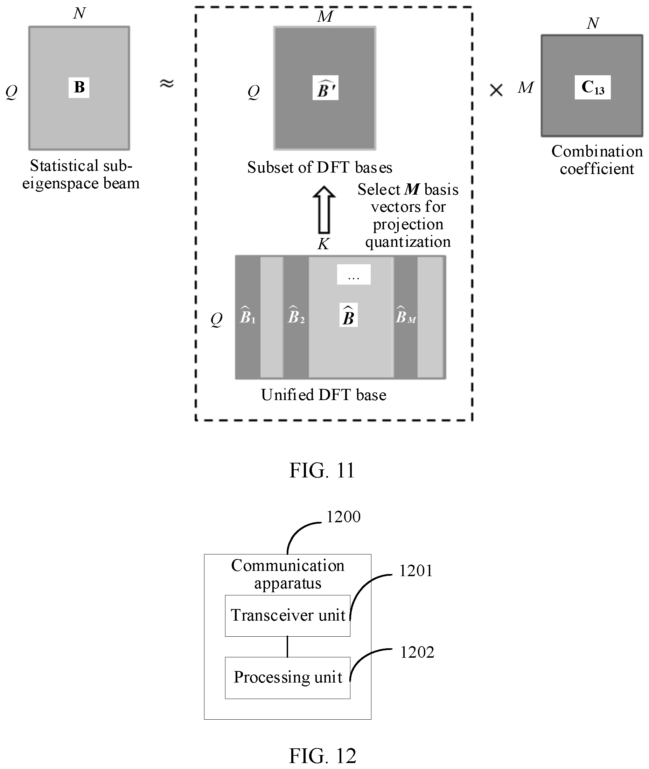

The following further describes the foregoing method by using an example. In this example, there are a total of $N$ sub-eigenspace beams, each of the $N$ beams has $Q$ dimensions, and statistical sub-eigenspace beams are represented by a matrix $B$. The network device configures K basis vectors for the UE, and the K basis vectors are represented by a matrix $\hat{B}$. Each of the K basis vectors has $Q$ dimensions. The UE groups the $N$ sub-eigenspace beams into $X$ groups ($X$ = 1 or $X$ > 1). For each group of sub-eigenspace beams, $M$ basis vectors are selected from the K basis vectors for projection quantization of the group of sub-eigenspace beams. The M basis vectors selected by the UE for each group of sub-eigenspace beams may be completely different, or partially the same, or completely the same. FIG. 10 is a diagram of projection quantization of a statistical sub-eigenspace beam when $X$ > 1 according to an example of an embodiment of this application. That $X$ > 1 represents that the $N$ sub-eigenspace beams are grouped into $X$ groups, and for each group of sub-eigenspace beams, the $M$ basis vectors are selected from the K basis vectors for projection quantization of the group of sub-eigenspace beams. FIG. 11 is a diagram of projection quantization of a statistical sub-eigenspace beam when $X$ = 1 according to an example of an embodiment of this application. That $X = 1$ represents that the $N$ sub-eigenspace beams do not need to be grouped, and the $M$ basis vectors are selected from the K basis vectors for projection quantization of the $N$ sub-eigenspace beams.

In FIG. 10, the $N$ sub-eigenspace beams are grouped into $X$ groups, each beam in each group of sub-eigenspace beams has $Q$ dimensions, and each group of sub-eigenspace beams includes $N_i$ beams. Quantities of beams included in each of the $X$ groups of sub-eigenspace beams may be the same or different. Each group of sub-eigenspace beams is represented by a matrix $\widehat{B_{N_i}}$. For each group of sub-eigenspace beams, the UE selects the $M$ basis vectors from the K basis vectors for projection quantization of the group of sub-eigenspace beams. Each group of basis vectors includes M basis vectors, the M basis vectors belong to the K basis vectors, and M≤K. A combination coefficient dimension corresponding to each of the X groups of basis vectors is M $*$ $N_i$. In this case, a long-periodicity reporting amount is $X \cdot log2(\lceil C(K, M) \rceil)$ bits. In addition, in a special case, when X=N, for each sub-eigenspace beam, the M basis vectors are selected from the K basis vectors for projection quantization, and a long-periodicity reporting amount is $N \cdot log2(\lceil C(K, M) \rceil)$ bits.

In FIG. 11, projection quantization is performed on the $N$ sub-eigenspace beams by using a same group of basis vectors without needing to perform grouping. The UE selects $M$ basis vectors from the K basis vectors to represent the $N$ sub-eigenspace beams. The selected group of basis vectors includes M basis vectors, and the M basis vectors may be represented by a matrix $\widehat{B'}$. Each of the M basis vectors has $Q$ dimensions. A combination coefficient dimension corresponding to the group of basis vectors is M $*$ N (represented by a matrix $C_{13}$). In this case, a long-periodicity reporting amount is $log2(\lceil C(K, M) \rceil)$ bits.

According to the channel state information feedback method provided in this embodiment of this application, the network device sends a basis vector configuration of sub-eigenspace beams to the terminal device, and the terminal device sends, to the network device based on the configuration, indication information of X groups of basis vectors selected by the terminal device from basis vectors of the sub-eigenspace beams. The X groups of basis vectors respectively represent X groups of sub-eigenspace beams. Each of the X groups of sub-eigenspace beams includes at least one beam. The indication information indicates K basis vectors. Each of the X groups of basis vectors includes M basis vectors, the M basis vectors belong to the K basis vectors, and M≤K. Because the quantity K of the basis vectors in the basis vectors configured by the network device is greater than the quantity M of basis vectors actually used by the UE, in other words, the network device configures more basis vectors (but K is less than a quantity of basis vectors in a universal set) and provides selections for the UE, a tradeoff between reporting overheads and feedback accuracy can be implemented.

It may be understood that, in the foregoing embodiments, the methods and/or the steps implemented by the UE may alternatively be implemented by a component (for example, a chip or a circuit) that may be used in the UE, and the methods and/or the steps implemented by the network device may alternatively be implemented by a component (for example, a chip or a circuit) that may be used in the network device.

The foregoing mainly describes the solutions provided in embodiments of this application from a perspective of interaction between nodes. Correspondingly, embodiments of this application further provide a communication apparatus. The communication apparatus is configured to implement the foregoing various methods. The communication apparatus may be the UE in the foregoing method embodiments, or may be a component that may be used in the UE. Alternatively, the communication apparatus may be the network device in the foregoing method embodiments, or may be a component that may be used in the network device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the method embodiments. For example, each functional module may be obtained through division based on each corresponding function, or two or more functions may be integrated into one processing unit. The integrated module may be implemented in a form of hardware, or may be implemented in a form of a software functional module. It should be noted that, in embodiments of this application, module division is an example, and is merely a logical function division. In actual implementation, another division manner may be used.

Based on the same concept as the foregoing channel state information feedback method, this application further provides the following communication apparatuses.

FIG. 12 is a diagram of a structure of a communication apparatus according to an embodiment of this application. The communication apparatus 1200 includes a transceiver unit 1201 and a processing unit 1202.

When the communication apparatus is configured to implement a function of the UE in the foregoing method embodiments, the transceiver unit 1201 is configured to perform the operations of the UE in S601 to S603 in the embodiment shown in FIG. 6, or the transceiver unit 1201 is configured to perform the operations of the UE in S901 to S903 in the embodiment shown in FIG. 9.

When the communication apparatus is configured to implement a function of the network device in the foregoing method embodiments, the transceiver unit 1201 is configured to perform the operations of the network device in S601 to S603 in the embodiment shown in FIG. 6, or the transceiver unit 1201 is configured to perform the operations of the network device in S901 to S903 in the embodiment shown in FIG. 9. For example, the transceiver unit 1201 may be deployed on the DU or the RU in FIG. 2A (a) to FIG. 2A (c) or FIG. 2B, and the processing unit 1202 may be deployed on the DU in FIG. 2A (a) to FIG. 2A (c) or FIG. 2B. Alternatively, for the processing unit 1202, some functions are deployed on the DU and some functions are deployed on the CU in FIG. 2A (a) to FIG. 2A (c) or FIG. 2B. For another example, both the transceiver unit 1201 and the processing unit 1202 may be deployed on the DU in FIG. 2D. For specific implementations of the transceiver unit 1201 and the processing unit 1202, refer to the descriptions in the foregoing method embodiments.

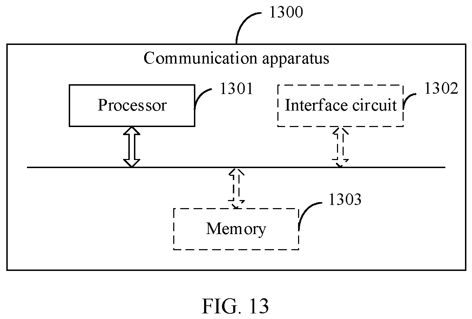

FIG. 13 is a diagram of a structure of another communication apparatus according to an embodiment of this application. The communication apparatus 1300 includes one or more processors 1301 (one processor is used as an example in the figure). Optionally, the communication apparatus 1300 may further include a memory 1303 (represented by dashed lines in the figure). The memory 1303 is configured to store instructions executed by the processor 1301, or store input data needed for running instructions by the processor 1301, or store data generated after the processor 1301 runs instructions. Optionally, the communication apparatus 1300 may further include an interface circuit 1302 (represented by dashed lines in the figure). The processor 1301 and the interface circuit 1302 are coupled to each other. It may be understood that the interface circuit 1302 may be a transceiver or an input/output interface. The processor 1301 is configured to implement a function of the processing unit 1202 in the embodiment shown in FIG. 12, and the interface circuit 1302 is configured to implement a function of the transceiver unit 1201 in the embodiment shown in FIG. 12.

When the communication apparatus is a chip used in UE, the chip implements a function of the UE in the foregoing method embodiments. The chip receives information from another module (for example, a radio frequency module or an antenna) in the UE, where the information is sent by a network device to the UE. Alternatively, the chip sends information to another module (for example, a radio frequency module or an antenna) in the UE, where the information is sent by the UE to a network device.

When the communication apparatus is a chip used in a network device, the chip implements a function of the network device in the foregoing method embodiments. The chip receives information from another module (for example, a radio frequency module or an antenna) in the network device, where the information is sent by UE to the network device. Alternatively, the chip sends information to another module (for example, a radio frequency module or an antenna) in the network device, where the information is sent by the network device to UE.

In addition, it should be noted that, the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

In this application, division into modules is an example, and is merely logical function division. In actual implementation, another division manner may be used. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of this application further provides a computer-readable storage medium. The computer-readable storage medium stores a computer program or instructions. When the computer program or the instructions are executed, the methods in the foregoing embodiments are implemented.

An embodiment of this application further provides a computer program product including instructions. When the instructions are run on a computer, the computer is caused to perform the methods in the foregoing embodiments.

An embodiment of this application further provides a communication system, including the foregoing communication apparatus.

An embodiment of this application further provides a circuit. The circuit is coupled to a memory. The circuit is configured to perform the methods shown in the foregoing embodiments. The circuit may include a chip circuit.

When the communication apparatus is a module used in a network device, the module in the network device implements a function of the network device in the foregoing method embodiments. The module in the network device receives information from another module (for example, a radio frequency module or an antenna) in the network device, where the information is sent by UE to the network device. Alternatively, the module in the network device sends information to another module (for example, a radio frequency module or an antenna) in the network device, where the information is sent by the network device to UE. The module in the network device herein may be a baseband chip of the network device, may be a CU, a DU, or another module, or may be an apparatus in an open radio access network (open radio access network, O-RAN) architecture, for example, an apparatus like an open CU or an open DU.

It should be noted that the foregoing units or one or more of the foregoing units may be implemented by software, hardware, or a combination of software and hardware. When any one of the foregoing units is implemented by software, the software exists in a form of computer program instructions, and is stored in the memory. The processor may be configured to execute the program instructions and implement the foregoing method procedures.

In this application, the processor may be a general-purpose processor, a digital signal processor, an application-specific integrated circuit, a field programmable gate array or another programmable logic device, a discrete gate or a transistor logic device, a discrete hardware component, or all or a part of circuits in the foregoing device that are configured to implement a processing function, and may implement or perform the methods, steps, and logical block diagrams disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

When the foregoing units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedures.

Optionally, an embodiment of this application further provides a chip system, including at least one processor and an interface. The at least one processor is coupled to a memory through the interface. When the at least one processor executes a computer program or instructions in the memory, the chip system is caused to perform the method in any one of the foregoing method embodiments. Optionally, the chip system may include a chip, or may include the chip and another discrete device. This is not specifically limited in this embodiment of this application.

The memory in this application may alternatively be a circuit or any other apparatus that can implement a storage function, and is configured to store program instructions and/or data. The memory is any other medium that can carry or store expected program code in a form of an instruction or a data structure and that can be accessed by a computer, but is not limited thereto. For example, the memory may be a non-volatile memory, for example, a digital versatile disc (digital versatile disc, DVD), a hard disk drive (hard disk drive, HDD), or a solid-state drive (solid-state drive, SSD), or may be a volatile memory (volatile memory), for example, a random access memory (random access memory, RAM).

It should be understood that, unless otherwise specified, "/" in descriptions of this application indicates an "or" relationship between associated objects. For example, A/B may indicate A or B, where A and B may be singular or plural. In addition, in descriptions of this application, unless otherwise specified, "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design solution described as an "example" or "for example" in embodiments of this application should not be construed as being more preferred or having more advantages than another embodiment or design solution. To be precise, use of the terms such as "example" or "for example" are intended to present a relative concept in a specific manner for ease of understanding.

All or some of the foregoing embodiments may be implemented by software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on a computer, all or some of the procedure or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement a plurality of functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the description of each embodiment has respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments or features of different embodiments described in this specification.

In this application, without a logical contradiction, mutual reference can be made between examples. For example, mutual reference can be made between methods and/or terms in the method embodiments, mutual reference can be made between functions and/or terms in the apparatus embodiments, and mutual reference can be made between functions and/or terms in the apparatus examples and the method examples.

## Claims

1. A channel state information feedback method, wherein the method comprises:

   receiving first indication information, wherein the first indication information indicates P groups of basis vectors, each of the P groups of basis vectors comprises M basis vectors, and P and M are positive integers greater than or equal to 1; and
   sending second indication information based on the first indication information, wherein the second indication information indicates X groups of basis vectors, the X groups of basis vectors respectively represent X groups of sub-eigenspace beams, the X groups of basis vectors belong to the P groups of basis vectors, each of the X groups of sub-eigenspace beams comprises at least one beam, and X is a positive integer greater than or equal to 1.

2. The method according to claim 1, wherein the first indication information comprises indexes of the P groups of basis vectors, or the first indication information comprises the P groups of basis vectors.

3. The method according to claim 1 or 2, wherein the method further comprises:
   receiving third indication information, wherein the third indication information indicates X.

4. The method according to any one of claims 1 to 3, wherein when X = 1, the second indication information is $log2(\lceil C(P,1) \rceil)$ bits; or when X > 1, the second indication information is $X \cdot log2(\lceil C(P,1) \rceil)$ bits.

5. The method according to any one of claims 1 to 4, wherein the method further comprises:
   sending fourth indication information, wherein the fourth indication information indicates a combination coefficient corresponding to each of the X groups of basis vectors, a combination coefficient dimension corresponding to each of the X groups of basis vectors is M $*$ $N_i$, $1 \le i \le X$, and $N_i$ is a quantity of beams in each group of sub-eigenspace beams.

6. A channel state information feedback method, wherein the method comprises:

   sending first indication information, wherein the first indication information indicates P groups of basis vectors, each of the P groups of basis vectors comprises M basis vectors, and P and M are positive integers greater than or equal to 1; and
   receiving second indication information, wherein the second indication information indicates X groups of basis vectors, the X groups of basis vectors respectively represent X groups of sub-eigenspace beams, the X groups of basis vectors belong to the P groups of basis vectors, each of the X groups of sub-eigenspace beams comprises at least one beam, and X is a positive integer greater than or equal to 1.

7. The method according to claim 6, wherein the first indication information comprises indexes of the P groups of basis vectors, or the first indication information comprises the P groups of basis vectors.

8. The method according to claim 6 or 7, wherein the method further comprises:
   sending third indication information, wherein the third indication information indicates X.

9. The method according to any one of claims 6 to 8, wherein when X = 1, the second indication information is $log2([C(P,1)])$ bits; or when X > 1, the second indication information is $X \cdot log2([C(P,1)])$ bits.

10. The method according to any one of claims 6 to 9, wherein the method further comprises:
    receiving fourth indication information, wherein the fourth indication information indicates a combination coefficient corresponding to each of the X groups of basis vectors, a combination coefficient dimension corresponding to each of the X groups of basis vectors is M $*$ $N_i$, $1 \le i \le X$, and $N_i$ is a quantity of beams in each group of sub-eigenspace beams.

11. A channel state information feedback method, wherein the method comprises:

    receiving first indication information, wherein the first indication information indicates K basis vectors, and K is a positive integer greater than or equal to 1; and

sending second indication information based on the first indication information, wherein the second indication information indicates X groups of basis vectors, the X groups of basis vectors respectively represent X groups of sub-eigenspace beams, each of the X groups of basis vectors comprises M basis vectors, the M basis vectors belong to the K basis vectors, M≤K, X is a positive integer greater than or equal to 1, and each group of sub-eigenspace beams comprises at least one beam.

12. The method according to claim 11, wherein the first indication information comprises indexes of the K basis vectors, or the first indication information comprises the K basis vectors.

13. The method according to claim 11 or 12, wherein the method further comprises:
    receiving third indication information, wherein the third indication information indicates X.

14. The method according to any one of claims 11 to 13, wherein when X = 1, the second indication information is $log2([C(K,M)])$ bits; or when X > 1, the second indication information is $X \cdot log2([C(K,M)])$ bits.

15. The method according to any one of claims 11 to 14, wherein the method further comprises:
    sending fourth indication information, wherein the fourth indication information indicates a combination coefficient corresponding to each of the X groups of basis vectors, a combination coefficient dimension corresponding to each of the X groups of basis vectors is M $*$ $N_i$, $1 \le i \le X$, and $N_i$ is a quantity of beams in each group of sub-eigenspace beams.

16. A channel state information feedback method, wherein the method comprises:

    sending first indication information, wherein the first indication information indicates K basis vectors, and K is a positive integer greater than or equal to 1; and
    receiving second indication information based on the first indication information, wherein the second indication information indicates X groups of basis vectors, the X groups of basis vectors respectively represent X groups of sub-eigenspace beams, each of the X groups of basis vectors comprises M basis vectors, the M basis vectors belong to the K basis vectors, M≤K, X is a positive integer greater than or equal to 1, and each group of sub-eigenspace beams comprises at least one beam.

17. The method according to claim 16, wherein the first indication information comprises indexes of the K basis vectors, or the first indication information comprises the K basis vectors.

18. The method according to claim 16 or 17, wherein the method further comprises:
sending third indication information, wherein the third indication information indicates X.

19. The method according to any one of claims 16 to 18, wherein when X = 1, the second indication information is $log2(\lceil C(K,M) \rceil)$ bits; or when X > 1, the second indication information is $X \cdot log2(\lceil C(K,M) \rceil)$ bits.

20. The method according to any one of claims 16 to 19, wherein the method further comprises:
receiving fourth indication information, wherein the fourth indication information indicates a combination coefficient corresponding to each of the X groups of basis vectors, a combination coefficient dimension corresponding to each of the X groups of basis vectors is M ∗ $N_i$, 1 ≤ i ≤ X, and $N_i$ is a quantity of beams in each group of sub-eigenspace beams.

21. A communication apparatus, wherein the apparatus comprises a transceiver unit, wherein

the transceiver unit is configured to receive first indication information, wherein the first indication information indicates P groups of basis vectors, each of the P groups of basis vectors comprises M basis vectors, and P and M are positive integers greater than or equal to 1; and the transceiver unit is further configured to send second indication information based on the first indication information, wherein the second indication information indicates X groups of basis vectors, the X groups of basis vectors respectively represent X groups of sub-eigenspace beams, the X groups of basis vectors belong to the P groups of basis vectors, each of the X groups of sub-eigenspace beams comprises at least one beam, and X is a positive integer greater than or equal to 1.

22. The apparatus according to claim 21, wherein the first indication information comprises indexes of the P groups of basis vectors, or the first indication information comprises the P groups of basis vectors.

23. The apparatus according to claim 21 or 22, wherein the transceiver unit is further configured to receive third indication information, wherein the third indication information indicates X.

24. The apparatus according to any one of claims 21 to 23, wherein when X = 1, the second indication information is $log2(\lceil C(P,1) \rceil)$ bits; or when X > 1, the second indication information is $X \cdot log2(\lceil C(P,1) \rceil)$ bits.

25. The apparatus according to any one of claims 21 to 24, wherein the transceiver unit is further configured to send fourth indication information, wherein the fourth indication information indicates a combination coefficient corresponding to each of the X groups of basis vectors, a combination coefficient dimension corresponding to each of the X groups of basis vectors is M ∗ $N_i$, 1 ≤ i ≤ X, and $N_i$ is a quantity of beams in each group of sub-eigenspace beams.

26. A communication apparatus, wherein the apparatus comprises a transceiver unit, wherein

the transceiver unit is configured to send first indication information, wherein the first indication information indicates P groups of basis vectors, each of the P groups of basis vectors comprises M basis vectors, and P and M are positive integers greater than or equal to 1; and the transceiver unit is further configured to receive second indication information, wherein the second indication information indicates X groups of basis vectors, the X groups of basis vectors respectively represent X groups of sub-eigenspace beams, the X groups of basis vectors belong to the P groups of basis vectors, each of the X groups of sub-eigenspace beams comprises at least one beam, and X is a positive integer greater than or equal to 1.

27. The apparatus according to claim 26, wherein the first indication information comprises indexes of the P groups of basis vectors, or the first indication information comprises the P groups of basis vectors.

28. The apparatus according to claim 26 or 27, wherein the transceiver unit is further configured to send third indication information, wherein the third indication information indicates X.

29. The apparatus according to any one of claims 26 to 28, wherein when X = 1, the second indication information is $log2(\lceil C(P,1) \rceil)$ bits; or when X > 1, the second indication information is $X \cdot log2(\lceil C(P,1) \rceil)$ bits.

30. The apparatus according to any one of claims 26 to 29, wherein the transceiver unit is further configured to receive fourth indication information, wherein the fourth indication information indicates a combination coefficient corresponding to each of the X groups of basis vectors, a combination coefficient dimension corresponding to each of the X groups of basis vectors is $M * N_i$, $1 \le i \le X$, and $N_i$ is a quantity of beams in each group of sub-eigenspace beams.

31. A communication apparatus, wherein the apparatus comprises a transceiver unit, wherein

the transceiver unit is configured to receive first indication information, wherein the first indication information indicates K basis vectors, and K is a positive integer greater than or equal to 1; and
the transceiver unit is further configured to send second indication information based on the first indication information, wherein the second indication information indicates X groups of basis vectors, the X groups of basis vectors respectively represent X groups of sub-eigenspace beams, each of the X groups of basis vectors comprises M basis vectors, the M basis vectors belong to the K basis vectors, M≤K, X is a positive integer greater than or equal to 1, and each group of sub-eigenspace beams comprises at least one beam.

32. The apparatus according to claim 31, wherein the first indication information comprises indexes of the K basis vectors, or the first indication information comprises the K basis vectors.

33. The apparatus according to claim 31 or 32, wherein the transceiver unit is further configured to receive third indication information, wherein the third indication information indicates X.

34. The apparatus according to any one of claims 31 to 33, wherein when X = 1, the second indication information is $log2(\lceil C(K,M)\rceil)$ bits; or when X > 1, the second indication information is $X \cdot log2(\lceil C(K,M)\rceil)$ bits.

35. The apparatus according to any one of claims 31 to 34, wherein the transceiver unit is further configured to send fourth indication information, wherein the fourth indication information indicates a combination coefficient corresponding to each of the X groups of basis vectors, a combination coefficient dimension corresponding to each of the X groups of basis vectors is $M * N_i$, $1 \le i \le X$, and $N_i$ is a quantity of beams in each group of sub-eigenspace beams.

36. A communication apparatus, wherein the apparatus comprises a transceiver unit, wherein

the transceiver unit is configured to send first indication information, wherein the first indication information indicates K basis vectors, and K is a positive integer greater than or equal to 1; and
the transceiver unit is further configured to receive second indication information based on the first indication information, wherein the second indication information indicates X groups of basis vectors, the X groups of basis vectors respectively represent X groups of sub-eigenspace beams, each of the X groups of basis vectors comprises M basis vectors, the M basis vectors belong to the K basis vectors, M≤K, X is a positive integer greater than or equal to 1, and each group of sub-eigenspace beams comprises at least one beam.

37. The apparatus according to claim 36, wherein the first indication information comprises indexes of the K basis vectors, or the first indication information comprises the K basis vectors.

38. The apparatus according to claim 36 or 37, wherein the transceiver unit is further configured to send third indication information, wherein the third indication information indicates X.

39. The apparatus according to any one of claims 36 to 38, wherein when X = 1, the second indication information is $log2(\lceil C(K,M)\rceil)$ bits; or when X > 1, the second indication information is $X \cdot log2(\lceil C(K,M)\rceil)$ bits.

40. The apparatus according to any one of claims 36 to 39, wherein the transceiver unit is further configured to receive fourth indication information, wherein the fourth indication information indicates a combination coefficient corresponding to each of the X groups of basis vectors, a combination coefficient dimension corresponding to each of the X groups of basis vectors is $M * N_i$, $1 \le i \le X$, and $N_i$ is a quantity of beams in each group of sub-eigenspace beams.

41. A communication system, wherein the system comprises a first communication apparatus and a second communication apparatus, the first communication apparatus is configured to implement the method according to any one of claims 1 to 5, and the second communication apparatus is configured to implement the method according to any one of claims 6 to 10.

42. A communication system, wherein the system comprises a first communication apparatus and a second communication apparatus, the first communication apparatus is configured to implement the method according to any one of claims 11 to 15, and the second communication apparatus is configured to implement the method according to any one of claims 16 to 20.

43. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 20 by using a logic circuit or by executing code instructions.

44. The communication apparatus according to claim 43, wherein the communication apparatus is a chip.

45. A chip module, comprising a transceiver component and a chip, wherein the chip is configured to perform the method according to any one of claims 1 to 20.

46. A computer-readable storage medium, wherein the storage medium stores a computer program or instructions; and when the computer program or the instructions are executed by a communication apparatus, the method according to any one of claims 1 to 20 is implemented.

47. A computer program product, wherein the computer program product comprises related program instructions; and when the related program instructions are executed, the method according to any one of claims 1 to 20 is implemented.

FIG. 1

Access network device

Near-real-
time RIC

| CU |

| DU |

| RU |

Terminal
device

FIG. 2A (a)

Non-real-
time RIC

Access
network
device

| CU |

| DU |

| RU |

Terminal
device

FIG. 2A (b)

Non-real-
time RIC

Access
network
device

Near-real-
time RIC

| CU |

| DU |

| RU |

Terminal
device

FIG. 2A (c)

FIG. 2B

FIG. 2C

Core network
device

AI entity

NG                    NG

CU                         CU                         OAM

AI entity        Xn         AI entity

F1                         F1

DU                         DU

AI entity                  AI entity                  AI entity

FIG. 2D

Network
device

S301: The network device sends channel
measurement configuration information

S302: The network device sends a channel
measurement pilot

S303: The UE feeds back CSI based on a
pilot measurement result

S304: The network device sends data based
on the CSI fed back by the UE

UE

FIG. 3

$N_r$ or $N_{rank}$

$N$

$N_r$ or $N_{rank}$

$N_t*N_f$ **H** $\approx$ $N_t*N_f$ **B** $\times$ $N$ **C₂**

Beam superposition coefficient

Statistical sub-eigenspace beam

FIG. 4

$N$

$M$

$N$

$N_t*N_f$ **B** $\approx$ $N_t*N_f$ **$\widehat{B}$** $\times$ $M$ **C₁₃**

Statistical sub-eigenspace beam

DFT base

Combination coefficient

FIG. 5

UE

Network device

S601: First indication information (indicating P groups of basis vectors)

S602: Second indication information (indicating X groups of basis vectors, where the X groups of basis vectors belong to the P groups of basis vectors)

S603: Fourth indication information (indicating a combination coefficient corresponding to each of the X groups of basis vectors)

FIG. 6

FIG. 7

Statistical sub-
eigenspace beam

DFT base

Combination
coefficient

Select a $p^{th}$
group for
projection
quantization

Configure $P$ groups of
candidate DFT bases

FIG. 8

UE

Network
device

S901: First indication information (indicating K basis
vectors)

S902: Second indication information (indicating X groups
of basis vectors, where each of the X groups of basis
vectors includes M basis vectors, and the M basis vectors
belong to the K basis vectors)

S903: Fourth indication information (indicating a
combination coefficient corresponding to each of the X
groups of basis vectors)

FIG. 9

FIG. 10

$N$

$Q$ **B** $\approx$ $Q$ $\widehat{B}'$ $M$ $\times$ $M$ **C₁₃** $N$

Statistical sub-
eigenspace beam

Subset of DFT bases

Combination
coefficient

Select $M$ basis
vectors for
projection
quantization

$K$

$Q$ $\widehat{B}_1$ $\widehat{B}_2$ $\widehat{B}$ $\widehat{B}_M$ ...

Unified DFT base

FIG. 11

1200

Communication
apparatus

1201

Transceiver unit

1202

Processing unit

FIG. 12

1300

Communication apparatus

Processor  1301

Interface circuit  1302

Memory  1303

FIG. 13

## INTERNATIONAL SEARCH REPORT

| International application No. |
| --- |
| **PCT/CN2024/115259** |

| A. | CLASSIFICATION OF SUBJECT MATTER |
| --- | --- |

H04B 7/0456(2017.01)i

According to International Patent Classification (IPC) or to both national classification and IPC

| B. | FIELDS SEARCHED |
| --- | --- |

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNABS; CNKI; CNTXT; ENTXTC; VCN; ENTXT; VEN; WPABS; DWPI; 3GPP: 波束, 指示, 信道状态信息, 预编码, 选择, 向量, 离散傅里叶变换, 反馈, 节省, 降低, 开销, CSI, channel state information, PMI, Precoding Matrix Index, matrix, vector, feedback, Saving, discrete Fourier transform, DFT

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2023291441 A1 (TELEFONAKTIEBOLAGET LM ERICSSON (PUBL)) 14 September 2023 (2023-09-14) description, paragraphs [0002]-[0317], and figures 1-24 | 1-47 |
| X | CN 116530028 A (SAMSUNG ELECTRONICS CO., LTD.) 01 August 2023 (2023-08-01) description, paragraphs [0009]-[0496], and figures 1-17 | 1-47 |
| X | CN 108574521 A (NOKIA SHANGHAI BELL CO., LTD.) 25 September 2018 (2018-09-25) description, paragraphs [0002]-[0144], and figures 1-8 | 1-47 |
| A | CN 111800172 A (HUAWEI TECHNOLOGIES CO., LTD.) 20 October 2020 (2020-10-20) entire document | 1-47 |
| A | CN 105406911 A (SAMSUNG ELECTRONICS CO., LTD.) 16 March 2016 (2016-03-16) entire document | 1-47 |
| A | CN 116418459 A (HUAWEI TECHNOLOGIES CO., LTD.) 11 July 2023 (2023-07-11) entire document | 1-47 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 November 2024** | **26 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/115259** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 2018145737 A1 (SAMSUNG ELECTRONICS CO., LTD.) 24 May 2018 (2018-05-24) entire document | 1-47 |

Form PCT/ISA/210 (second sheet) (July 2022)

## INTERNATIONAL SEARCH REPORT
### Information on patent family members

International application No.

**PCT/CN2024/115259**

| Patent document cited in search report | | | Publication date (day/month/year) | Patent family member(s) | | | Publication date (day/month/year) |
|---|---|---|---|---|---|---|---|
| US | 2023291441 | A1 | 14 September 2023 | JP | 2023533692 | A | 04 August 2023 |
| | | | | CA | 3185386 | A1 | 13 January 2022 |
| | | | | EP | 4179638 | A1 | 17 May 2023 |
| | | | | WO | 2022009178 | A1 | 13 January 2022 |
| | | | | KR | 20230034379 | A | 09 March 2023 |
| CN | 116530028 | A | 01 August 2023 | US | 2022124537 | A1 | 21 April 2022 |
| | | | | KR | 20230093260 | A | 27 June 2023 |
| | | | | JP | 2023547120 | A | 09 November 2023 |
| | | | | WO | 2022086164 | A1 | 28 April 2022 |
| | | | | EP | 4214852 | A1 | 26 July 2023 |
| | | | | EP | 4214852 | A4 | 24 April 2024 |
| CN | 108574521 | A | 25 September 2018 | None | | | |
| CN | 111800172 | A | 20 October 2020 | None | | | |
| CN | 105406911 | A | 16 March 2016 | WO | 2016039565 | A1 | 17 March 2016 |
| | | | | KR | 20160030457 | A | 18 March 2016 |
| | | | | KR | 102348754 | B1 | 07 January 2022 |
| | | | | US | 2016072562 | A1 | 10 March 2016 |
| CN | 116418459 | A | 11 July 2023 | None | | | |
| US | 2018145737 | A1 | 24 May 2018 | KR | 20190089933 | A | 31 July 2019 |
| | | | | KR | 102392749 | B1 | 29 April 2022 |
| | | | | US | 10200103 | B2 | 05 February 2019 |
| | | | | EP | 3529912 | A1 | 28 August 2019 |
| | | | | WO | 2018097600 | A1 | 31 May 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311283936